# EUROPEAN PATENT APPLICATION

(11) **EP 4 793 550 A1**
(43) Date of publication of application: **19.08.2026**
(21) Application number: 26157570.8
(22) Date of filing: 10.02.2026
(51) Int. Cl.: F23R 3/14, F23R 3/28

(54) **MONITORING SYSTEM AND MONITORING METHOD**

(30) Priority: 12.02.2025 JP 2025020982
(71) Applicant: Yokogawa Electric Corporation, Musashino-shi, Tokyo 180-8750 (JP)
(72) Inventor: MITO, Shinya, Musashino-shi, Tokyo 180-8750 (JP); NONAKA, Masahiro, Musashino-shi, Tokyo 180-8750 (JP); MORIYAMA, Akira, Musashino-shi, Tokyo 180-8750 (JP); UEMURA, Hideo, Musashino-shi, Tokyo 180-8750 (JP); KOMIYAMA, Masaharu, Gifu, Gifu 501-1194 (JP)
(74) Representative: Winter, Brandl - Partnerschaft mbB

(57) **Abstract**

A combustor monitoring system (1000) includes a gas turbine combustor (10) and an operator terminal (20) that is connected to the gas turbine combustor (10). The gas turbine combustor (10) includes a burner (110). The burner (110) includes a swirler (112a) that is installed in an inner tube portion of a channel in which a mixture gas (MG) including a fuel (FG) and air (AG) flows, and a temperature sensor (111) that output temperature data indicating temperature of the channel. The operator terminal (20) acquires the temperature data, detects occurrence of flashback (FB) in the channel based on the temperature data, and adjusts the angles of the swirler (112a) when detecting the occurrence of the flashback (FB).

## Description

### FIELD

The present disclosure relates to a monitoring system and a monitoring method.

### BACKGROUND

In a burner of a combustor (appropriately referred to as a "gas turbine combustor") included in a gas turbine, a phenomenon called "flashback", in which flame due to combustion of fuel-air gas mixture flows backward and goes upstream through a channel from a scheduled combustion zone, may occur in some cases. Further, to prevent occurrence of the flashback, a technology of arranging an aperture portion at an outlet portion of the burner to increase flow velocity and reduce an area in which pre-mixed fuel-air mixture velocity is smaller than a combustion rate is known (see, for example, Japanese Laid-open Patent Publication No. 2000-146181).

However, it is difficult to prevent occurrence of the flashback in a burner of a combustor. For example, when a substance, such as gaseous hydrogen, with a high combustion rate is used as a fuel, it is difficult to prevent occurrence of the flashback.

The present disclosure has been conceived in view of the above-described circumstances, and an object of the present disclosure is to prevent occurrence of flashback in a burner of a combustor.

### SUMMARY

According to an aspect of the embodiments, a monitoring system includes a combustor, and a monitoring apparatus that is connected to the combustor, wherein the combustor includes a burner that includes a swirler that is installed in an inner tube portion of a channel in which a mixture gas including a fuel and air flows, and a temperature sensor that outputs temperature data indicating temperature of the channel, and the monitoring apparatus includes a processor that acquires the temperature data, detects occurrence of flashback in the channel based on the temperature data, and adjusts an angle of the swirler when detecting the backflow of the flame.

According to an aspect of the embodiments, a monitoring method implemented by a monitoring system includes a combustor and a monitoring apparatus connected to the combustor, wherein the combustor includes a burner that includes a swirler that is installed in an inner tube portion of a channel in which a mixture gas including a fuel and air flows, and a temperature sensor that outputs temperature data indicating temperature of the channel, and the monitoring apparatus acquires the temperature data, detects occurrence of flashback in the channel based on the temperature data, and adjusts an angle of the swirler when detecting the backflow of the flame.

### BRIEF DESCRIPTION OF THE DRAWINGS

FIG. 1 is a diagram illustrating a configuration example and a process example of a combustor monitoring system according to one embodiment;
FIG. 2 is a block diagram illustrating a configuration example of each of apparatuses in the combustor monitoring system according to one embodiment;
FIG. 3 is a diagram illustrating an example of a temperature data storage unit of an operator terminal according to one embodiment;
FIG. 4 is a diagram illustrating an example of a detection result storage unit of the operator terminal according to one embodiment;
FIG. 5 is a diagram illustrating an example of an adjustment result storage unit of the operator terminal according to one embodiment;
FIG. 6 is a diagram for explaining a basic principle of a gas turbine combustor according to one embodiment;
FIG. 7 is a diagram for explaining a basic principle 1 of a burner according to one embodiment;
FIG. 8 is a diagram for explaining a basic principle 2 of the burner according to one embodiment;
FIG. 9 is a diagram for explaining a basic principle 3 of the burner according to one embodiment;
FIG. 10 is a diagram illustrating a specific example 1-1 of the burner according to one embodiment;
FIG. 11 is a diagram illustrating a specific example 1-2 of the burner according to one embodiment;
FIG. 12 is a diagram illustrating a specific example 1-3 of the burner according to one embodiment;
FIG. 13 is a diagram illustrating the specific example 2-1 of the burner according to one embodiment;
FIG. 14 is a diagram illustrating the specific example 2-2 of the burner according to one embodiment;
FIG. 15 is a diagram illustrating the specific example 2-3 of the burner according to one embodiment;
FIG. 16 is a diagram illustrating a specific example 3-1 of the burner according to one embodiment;
FIG. 17 is a diagram illustrating a specific example 3-2 of the burner according to one embodiment;
FIG. 18 is a flowchart illustrating an example of the entire flow of the combustor monitoring system according to one embodiment;
FIG. 19 is a flowchart illustrating an example of the flow of a temperature data management process of the combustor monitoring system according to one embodiment;
FIG. 20 is a flowchart illustrating an example of the flow of a detection result management process of the combustor monitoring system according to one embodiment;
FIG. 21 is a flowchart illustrating an example of the flow of an adjustment result management process of the combustor monitoring system according to one embodiment; and
FIG. 22 is a diagram illustrating a hardware configuration example according to one embodiment.

### DETAILED DESCRIPTION OF THE PREFERRED EMBODIMENTS

Embodiments of a monitoring system and a monitoring method according to the present disclosure will be described in detail below with reference to the drawings. Meanwhile, the present disclosure is not limited by the embodiments described below.

A configuration and a process of a combustor monitoring system 1000 according to one embodiment, a configuration and a process of each of apparatuses of the combustor monitoring system 1000, a specific example of the combustor monitoring system 1000, a flow of each of processes of the combustor monitoring system 1000, and effects of one embodiment will be described below.

### 1. Configuration and process of combustor monitoring system 1000

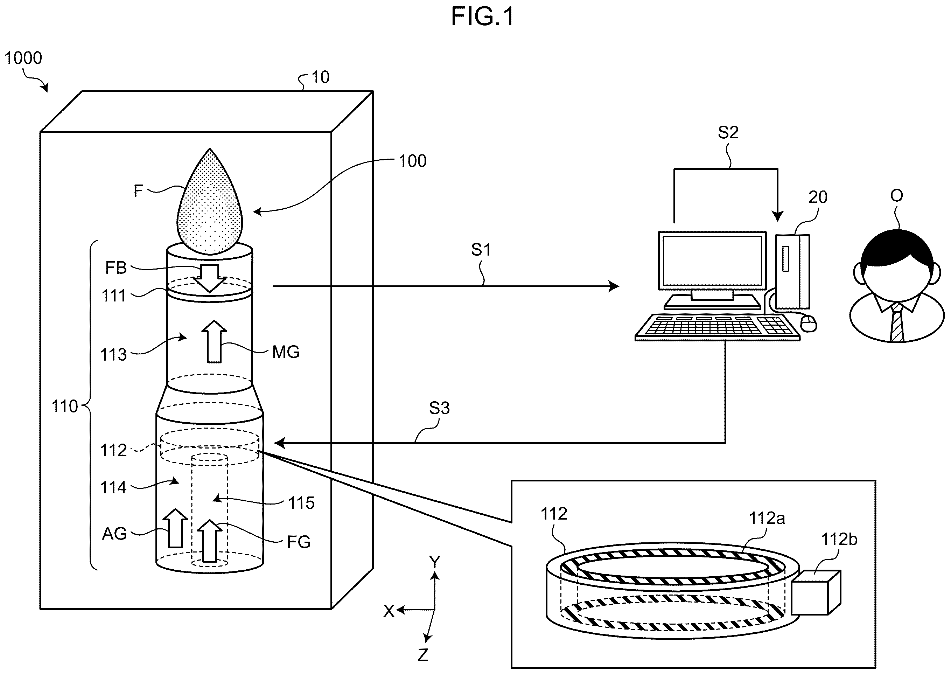

A configuration and a process of the combustor monitoring system 1000 according to one embodiment will be described below with reference to FIG. 1. FIG. 1 is a diagram illustrating a configuration example and a process example of the combustor monitoring system 1000 according to one embodiment. In the following, a configuration example of the entire combustor monitoring system 1000, a process example of the combustor monitoring system 1000, and effects of the combustor monitoring system 1000 will be described.

### 1-1. Configuration example of entire combustor monitoring system 1000

The combustor monitoring system 1000 includes a gas turbine combustor 10 and an operator terminal 20. Here, the gas turbine combustor 10 and the operator terminal 20 are communicably connected to each other via a predetermined communication network (not illustrated) in a wired or wireless manner. Meanwhile, various kinds of communication networks, such as the Internet or a dedicated line, may be adopted as the predetermined communication network.

### 1-1-1. Gas turbine combustor 10

The gas turbine combustor 10 is installed in a gas turbine and burns a mixture gas MG of a fuel FG and air AG. At this time, a burner 110 is installed inside a combustion chamber 100, and the gas turbine combustor 10 generates flame F by burning the mixture gas MG.

In the example illustrated in FIG. 1, the burner 110 has a structure in which cylindrical tubes with different tube diameters and a tube of a circular truncated cone shape are combined, where a tube diameter direction is an XZ plane and a tube axial direction is a Y axis. Further, the burner 110 has a structure in which, toward a positive Y axis direction, the cylindrical tube with a large tube diameter, the tube of the circular truncated cone shape, and the cylindrical tube with a small diameter are combined in this order. In the above-described example, the burner 110 may have a structure in which the tube diameters are the same. Furthermore, in the following, a flow toward the positive Y axis direction will be described as a flow from an upstream side to a downstream side of the burner 110. Moreover, the burner 110 includes a temperature sensor 111, a swirler unit 112, a mixture gas channel 113, an air channel 114, and a fuel channel 115. Meanwhile, in the following, the mixture gas channel 113, the air channel 114, and the fuel channel 115 may be simply described as a "channel" as a channel of the entire burner 110.

### 1-1-1-1. Temperature sensor 111

The temperature sensor 111 is disposed on the downstream side relative to the tube of the circular truncated cone shape of the burner 110. For example, the temperature sensor 111 is an optical fiber sensor and detects temperature of the mixture gas channel 113.

### 1-1-1-2. Swirler unit 112

The swirler unit 112 is disposed on the upstream side relative to the tube of the circular truncated cone shape of the burner 110 and on the downstream side relative to the air channel 114 and the fuel channel 115. For example, the swirler unit 112 includes a plurality of swirlers 112a and a stepping motor 112b. Here, the swirlers 112a decrease rotational speed of the mixture gas MG and increase flow velocity of the mixture gas MG in the tube axial direction with approach to a horizontal angle with respect to the tube axial direction. In particular, the swirlers 112a increase flow velocity at a channel central portion as the flow velocity of the mixture gas MG in the tube axial direction. In contrast, the swirlers 112a increase the rotational speed of the mixture gas MG and decrease the flow velocity of the mixture gas MG in the tube axial direction with approach to a vertical angle with respect to the tube axial direction. In particular, the swirlers 112a decrease the flow velocity at the channel central portion as the flow velocity of the mixture gas MG in the tube axial direction. Furthermore, the stepping motor 112b drives the swirlers 112a to adjust angles of the swirlers 112a.

### 1-1-1-3. Mixture gas channel 113

The mixture gas channel 113 is a channel on the downstream side relative to the tube of the circular truncated cone shape of the burner 110. For example, in the mixture gas channel 113, the mixture gas MG of the fuel FG and the air AG that has passed through the swirler unit 112 flows.

### 1-1-1-4. Air channel 114

The air channel 114 is a channel on the upstream side relative to the tube of the circular truncated cone shape of the burner 110 and on an outer diameter side in the tube diameter direction. For example, in the air channel 114, the air AG and the mixture gas MG of the fuel FG and the air AG that has not yet passed through the swirler unit 112 flow.

### 1-1-1-5. Fuel channel 115

The fuel channel 115 is a channel on the upstream side relative to the tube of the circular truncated cone shape of the burner 110 and on an inner diameter side in the tube diameter direction. For example, in the fuel channel 115, the fuel FG flow and the fuel FG that has passed through a fuel nozzle FN (not illustrated) is sent to the air channel 114, so that the fuel FG and the air AG are mixed.

### 1-1-2. Operator terminal 20

The operator terminal 20 is an administrator terminal that is used by an operator O who is an administrator of a gas turbine facility. For example, the operator terminal 20 is installed in an operator room of the gas turbine facility and operated by the operator O. Meanwhile, the combustor monitoring system 1000 illustrated in FIG. 1 may include the plurality of operator terminals 20. Further, in the example illustrated in FIG. 1, a case is illustrated in which the operator terminal 20 is implemented by a desktop Personal Computer (PC), but the operator terminal 20 may be implemented by a notebook PC, a smartphone, a server apparatus, a cloud system, or the like.

### 1-2. Process example of entire combustor monitoring system 1000

A process of the entire combustor monitoring system 1000 will be described below. Meanwhile, processes from Step S1 to Step S3 below may be performed in different order. For example, the process at Step S3 may be performed before the process at Step S1. Further, some of the processes from Step S1 to Step S3 below may be omitted. For example, only a part of the processes from Step S1 to Step S3 may be performed.

### 1-2-1. Temperature data acquisition process

Firstly, the operator terminal 20 performs a temperature data acquisition process (Step S1). For example, the operator terminal 20 acquires temperature data D_{T} that indicates temperature T of the mixture gas channel 113 from the temperature sensor 111 at intervals of 0.01 second.

### 1-2-2. Flashback occurrence detection process

Secondly, the operator terminal 20 performs a flashback occurrence detection process (Step S2). For example, when the temperature data D_{T} of the mixture gas channel 113 exceeds a threshold X, the operator terminal 20 detects occurrence of flashback FB in the mixture gas channel 113.

### 1-2-3. Swirler angle adjustment process

Thirdly, the operator terminal 20 performs a swirler angle adjustment process (Step S3). For example, the operator terminal 20 transmits a control signal to the stepping motor 112b, adjusts the angles of the swirlers 112a, decreases the rotational speed of the mixture gas MG, and increases the flow velocity of the mixture gas MG in the tube axial direction to prevent occurrence of the flashback FB.

### 1-3. Effects of combustor monitoring system 1000

In the following, an overview of the flashback FB and an overview and a problem of a combustor monitoring system 1000-P according to a reference technology will be first described, and thereafter, an overview and effects of the combustor monitoring system 1000 will be described.

### 1-3-1. Overview of flashback FB

The flashback FB may occur when a mixing ratio of the fuel FG and the air AG is inappropriate, when temperature or pressure in the combustion chamber 100 is instable, or when design of the gas turbine combustor 10 is inappropriate. When the flashback FB occurs, the flame F flows backward from a combustion zone in the combustion chamber 100, so that safety and efficiency of the apparatus may be adversely affected. In particular, when gaseous hydrogen (H₂) is used as the fuel FG, a combustion rate is high, so that the flashback FB is likely to occur. In contrast, gaseous hydrogen is increasingly used as the fuel FG of the gas turbine combustor 10 from the viewpoint of realizing the decarbonized society.

### 1-3-2. Overview of combustor monitoring system 1000-P

The combustor monitoring system 1000-P according to the reference technology includes an aperture portion at an outlet portion of a burner 110-P of a gas turbine combustor 10-P according to the reference technology to increase flow velocity and reduce an area in which pre-mixed fuel-air mixture velocity is smaller than the combustion rate. Therefore, the combustor monitoring system 1000-P is able to prevent occurrence of the flashback FB by physically changing the structure of the gas turbine combustor 10-P.

### 1-3-3. Problem with combustor monitoring system 1000-P

The combustor monitoring system 1000-P according to the reference technology has problems as described below. Firstly, in the combustor monitoring system 1000-P, when a substance, such as gaseous hydrogen, with a high combustion rate is used as the fuel FG, it is difficult to prevent occurrence of the flashback FB. Secondly, in the combustor monitoring system 1000-P, even when it is possible to prevent occurrence of the flashback FB, operating conditions are limited and it is difficult to adjust the operating conditions in accordance with situations, so that operating efficiency may be reduced. Thirdly, in the combustor monitoring system 1000-P, it is difficult to cope with the flashback FB that occurs due to deterioration of equipment or an unexpected failure of a component.

### 1-3-4. Overview of combustor monitoring system 1000

The combustor monitoring system 1000 according to one embodiment performs processes as described below. Firstly, the operator terminal 20 acquires the temperature data D_{T} that indicates the temperature T of the mixture gas channel 113 from the temperature sensors 111 at regular time intervals. Secondly, when the temperature data D_{T} of the mixture gas channel 113 exceeds the threshold X, the operator terminal 20 detects occurrence of the flashback FB in the mixture gas channel 113. Thirdly, the operator terminal 20 transmits a control signal to the stepping motor 112b, adjusts the angles of the swirlers 112a, decreases the rotational speed of the mixture gas MG, and increases the flow velocity of the mixture gas MG in the tube axial direction to prevent occurrence of the flashback FB.

### 1-3-5. Effects of combustor monitoring system 1000

The combustor monitoring system 1000 according to one embodiment achieves effects as described below. Firstly, in the combustor monitoring system 1000, even when a substance, such as gaseous hydrogen, with a high combustion rate is used as the fuel FG, it is possible to prevent occurrence of the flashback FB. Secondly, in the combustor monitoring system 1000, even when occurrence of the flashback FB is prevented, it is possible to adjust operating conditions in accordance with situations without limiting the operating conditions, so that operating efficiency is not reduced. Thirdly, in the combustor monitoring system 1000, it is possible to cope with the flashback FB that occurs due to deterioration of equipment or an unexpected failure of a component.

As described above, in the combustor monitoring system 1000, it is possible to prevent occurrence of the flashback FB in the burner 110 of the gas turbine combustor 10.

### 2. Configuration and process of each of apparatuses in combustor monitoring system 1000

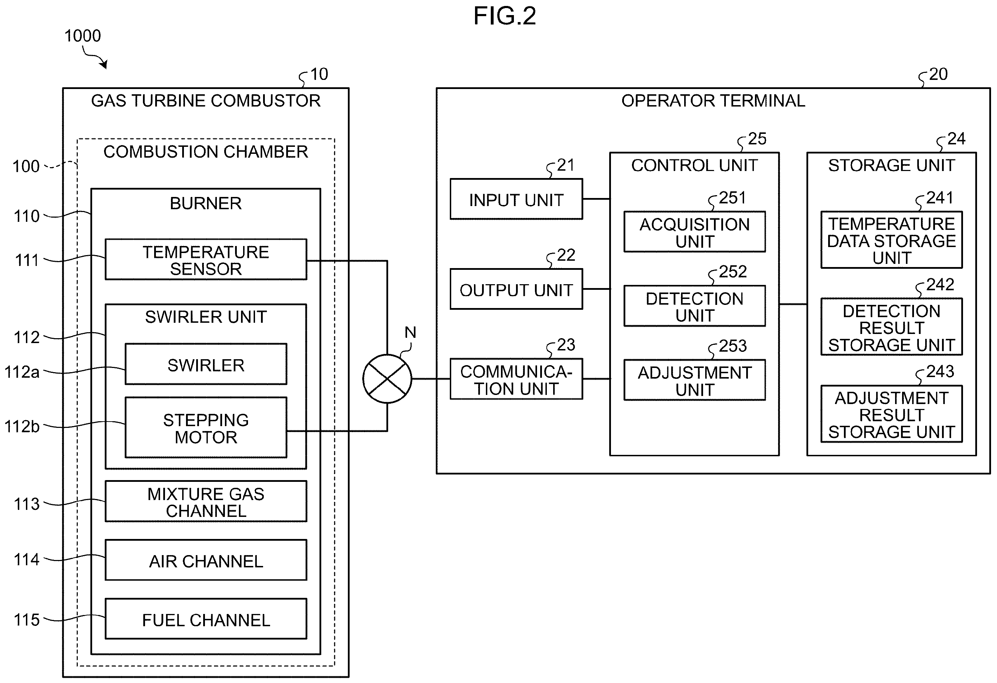

A configuration and a process of each of apparatuses that are included in the combustor monitoring system 1000 illustrated in FIG. 1 will be described below with reference to FIG. 2. FIG. 2 is a block diagram illustrating a configuration example of each of the apparatuses in the combustor monitoring system 1000 according to one embodiment. In the following, a configuration example of the entire combustor monitoring system 1000 according to one embodiment, a configuration example and a process example of the gas turbine combustor 10, a configuration example and a process example of the operator terminal 20 will be described.

### 2-1. Configuration example of entire combustor monitoring system 1000

A configuration example of the entire combustor monitoring system 1000 illustrated in FIG. 1 will be described below with reference to FIG. 2. As illustrated in FIG. 2, the combustor monitoring system 1000 includes the gas turbine combustor 10 and the operator terminal 20. Further, the gas turbine combustor 10 and the operator terminal 20 are communicably connected to each other via a communication network N that is implemented by the Internet, a dedicated line, or the like.

### 2-2. Configuration example and process example of gas turbine combustor 10

A configuration example and a process example of the gas turbine combustor 10 will be described with reference to FIG. 2. For example, the gas turbine combustor 10 includes the combustion chamber 100 and the burner 110.

### 2-2-1. Combustion chamber 100

The combustion chamber 100 is an internal space of the gas turbine combustor 10 and the burner 110 is installed in the combustion chamber 100. Further, the combustion chamber 100 is a combustion zone in which the flame F emitted from the burner 110 exists.

### 2-2-2. Burner 110

The burner 110 is a combustion apparatus that is installed inside the combustion chamber 100, burns the mixture gas MG including the fuel FG and the air AG, and emits the flame F. The burner 110 includes the temperature sensor 111, the swirler unit 112, the mixture gas channel 113, the air channel 114, and the fuel channel 115.

### 2-2-2-1. Temperature sensor 111

The temperature sensor 111 is a sensor that outputs the temperature data D_{T} that indicates the temperature T. Further, the temperature sensor 111 is a sensor that is installed in an outer tube portion and an inner tube portion of the mixture gas channel 113.

The temperature sensor 111 outputs the temperature data D_{T} that indicates the temperature T of the mixture gas channel 113 in which the mixture gas MG including the fuel FG and the air AG flows. Furthermore, the temperature sensor 111 is, for example, an optical fiber sensor. Meanwhile, the temperature sensor 111 is not specifically limited as long as the temperature sensor 111 is a sensor that outputs the temperature data D_{T} that indicates the temperature T.

The temperature sensor 111 is installed on the downstream side of the swirlers 112a in the tube axial direction of the mixture gas channel 113. Further, the temperature sensor 111 is installed in the outer tube portion of the mixture gas channel 113. Furthermore, the temperature sensor 111 is installed in the inner tube portion of the mixture gas channel 113. Moreover, the temperature sensor 111 is installed in a tube circumferential direction of the mixture gas channel 113. Furthermore, the plurality of temperature sensors 111 are installed at a plurality of different positions on the tube of the mixture gas channel 113. Meanwhile, details of the temperature sensor 111 will be described in the section 3-2. Specific example of the burner 110 in the section 3. Specific example of the combustor monitoring system 1000.

### 2-2-2-2. Swirler unit 112

The swirler unit 112 includes the swirlers 112a and the stepping motor 112b. Further, the swirler unit 112 is installed on the downstream side of the air channel 114 and the fuel channel 115 and in the inner tube portion of the mixture gas channel 113 on the upstream side.

### Swirlers 112a

The swirlers 112a have movable wing-shaped structures and are installed at one or more positions in a circumferential direction of a ring structure of the swirler unit 112. For example, the swirlers 112a are installed in the inner tube portion of the channel in which the mixture gas MG including the fuel FG and the air AG flows. Further, for the swirlers 112a, the stepping motor 112b capable of driving the swirlers 112a is installed. Furthermore, the swirlers 112a decrease the rotational speed of the mixture gas MG and increase the flow velocity of the mixture gas MG in the tube axial direction with approach to the horizontal angle (0°) with respect to the tube axial direction. In particular, the swirlers 112a increase the flow velocity at the channel central portion as the flow velocity of the mixture gas MG in the tube axial direction. In contrast, the swirlers 112a increase the rotational speed of the mixture gas MG and decrease the flow velocity of the mixture gas MG in the tube axial direction with approach to the vertical angle (90°) with respect to the tube axial direction. In particular, the swirlers 112a decrease the flow velocity at the channel central portion as the flow velocity of the mixture gas MG in the tube axial direction.

### Stepping motor 112b

The stepping motor 112b is a motor that is installed in the swirler unit 112 and drives the swirlers 112a to adjust swirler angles of the swirlers 112a. Meanwhile, FIG. 2 illustrates an example in which the stepping motor 112b is adopted; however, it may be possible to adopt a servo motor or others without specific limitation as long as it is possible to adjust the swirler angles of the swirlers 112a.

### 2-2-2-3. Mixture gas channel 113

The mixture gas channel 113 is a channel on the downstream side of the air channel 114 and the fuel channel 115 and is a channel in which the mixture gas MG that includes the fuel FG and the air AG and that has passed through the swirler unit 112 flows.

### 2-2-2-4. Air channel 114

The air channel 114 is a channel on the upstream side of the mixture gas channel 113 and is a channel in which the air AG that is not yet mixed with the fuel FG flows. Further, the air channel 114 is a channel in which the mixture gas MG that includes the fuel FG and the air AG and that has not yet passed through the swirler unit 112 flows. Furthermore, the air channel 114 is, for example, a channel on the outer diameter side in the tube diameter direction.

### 2-2-2-5. Fuel channel 115

The fuel channel 115 is a channel on the upstream side of the mixture gas channel 113 and is a channel in which the fuel FG that is not yet mixed with the air AG flows. Further, the fuel channel 115 is a channel for sending the fuel FG that has passed through a fuel nozzle FN (not illustrated) to the air channel 114. Furthermore, the fuel channel 115 is, for example, a channel on the inner diameter side in the tube diameter direction. Moreover, the fuel FG is, for example, gaseous hydrogen. Meanwhile, the fuel FG may be natural gas, gasoline, or oil, such as light oil, and is not specifically limited.

### 2-2-3. Various kinds of sensors

The gas turbine combustor 10 may include various kinds of sensors (not illustrated). For example, the gas turbine combustor 10 may include, as components of the burner 110, a light source 116 and a light receiving sensor 117 that detects light emitted from the light source 116. At this time, the light receiving sensor 117 detects light receiving data D_{L} that indicates shapes of the swirlers 112a. Further, the gas turbine combustor 10 may include, as a component of the burner 110, a power sensor 118. At this time, the power sensor 118 detects power data D_{W} that indicates power consumption W of the stepping motor 112b. Furthermore, the gas turbine combustor 10 may include, as a component of the burner 110, a temperature sensor different from the temperature sensor 111, a pressure sensor, an acoustic sensor, or the like.

### 2-3. Configuration example and process example of operator terminal 20

A configuration example and a process example of the operator terminal 20 will be described below with reference to FIG. 2. The operator terminal 20 is a monitoring apparatus that is connected to the gas turbine combustor 10. The operator terminal 20 includes an input unit 21, an output unit 22, a communication unit 23, a storage unit 24, and a control unit 25.

### 2-3-1. Input unit 21

The input unit 21 controls input of various kinds of information to the operator terminal 20. For example, the input unit 21 is implemented by a mouse, a keyboard, or the like, and receives input of various kinds of information to the operator terminal 20.

### 2-3-2. Output unit 22

The output unit 22 controls output of various kinds of information from the operator terminal 20. For example, the output unit 22 is implemented by a display or the like, and displays various kinds of information stored in the operator terminal 20.

### 2-3-3. Communication unit 23

The communication unit 23 controls communication with a different apparatus. For example, the communication unit 23 performs data communication with each of communication apparatuses via a router or the like. Further, the communication unit 23 is able to perform data communication with a terminal or the like (not illustrated).

### 2-3-4. Storage unit 24

The storage unit 24 stores therein various kinds of information that are referred to when the control unit 25 operates, and various kinds of information that are acquired when the control unit 25 operates. The storage unit 24 includes a temperature data storage unit 241, a detection result storage unit 242, and an adjustment result storage unit 243. Here, the storage unit 24 may be implemented by, for example, a semiconductor memory device such as a Random Access Memory (RAM) or a flash memory, or a storage device, such as a hard disk or an optical disk. Meanwhile, in the example illustrated in FIG. 2, the storage unit 24 is arranged inside the operator terminal 20, but may be arranged outside the operator terminal 20 or it may be possible to arrange a plurality of storage units.

### 2-3-4-1. Temperature data storage unit 241

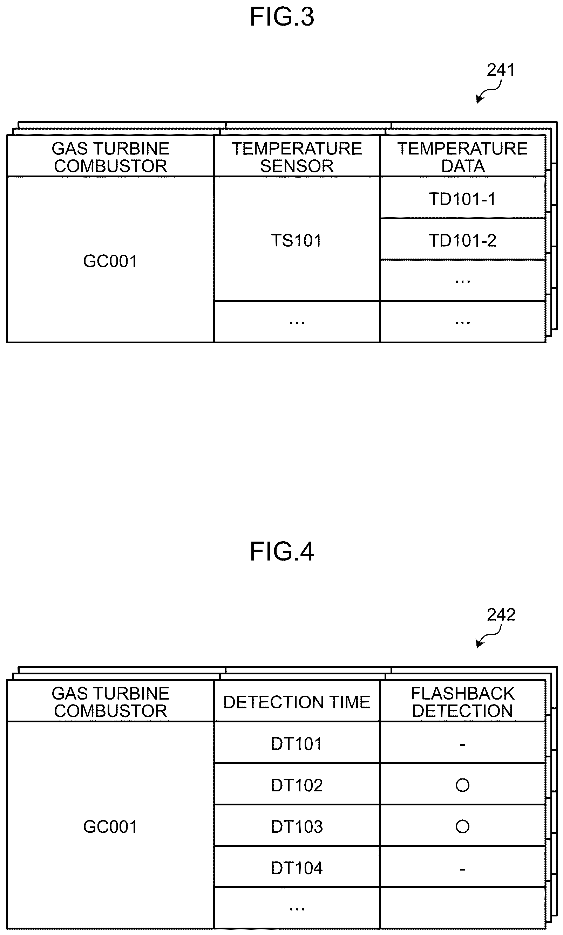

The temperature data storage unit 241 stores therein the temperature data D_{T}. For example, the temperature data storage unit 241 stores therein the temperature data D_{T} that is output by the temperature sensor 111 and that is acquired by an acquisition unit 251 of the control unit 25 (to be described later). An example of data that is stored in the temperature data storage unit 241 will be described below with reference to FIG. 3. FIG. 3 is a diagram illustrating an example of the temperature data storage unit 241 of the operator terminal 20 according to one embodiment. In the example illustrated in FIG. 3, the temperature data storage unit 241 stores therein items such as a "gas turbine combustor", a "temperature sensor", and "temperature data".

The "gas turbine combustor" indicates identification information for identifying the gas turbine combustor 10 that is a monitoring target. For example, the "gas turbine combustor 10" is an identification number or an identification symbol of a gas turbine and the gas turbine combustor 10. The "temperature sensor" indicates identification information for identifying the temperature sensor 111 that outputs the temperature data D_{T} that indicates the temperature T. For example, the "temperature sensor" is an identification number or an identification symbol of the temperature sensor 111 that is installed in the outer tube portion and the inner tube portion of the mixture gas channel 113 of the burner 110. The "temperature data" is the temperature data D_{T} that indicates the temperature T that is output by the temperature sensor 111. For example, the "temperature data" is analog data or digital data that indicates a frequency change amount output by the temperature sensor 111 that is an optical fiber sensor.

Specifically, FIG. 3 illustrates an example in which the temperature data storage unit 241 stores therein "TD101-1", "TD101-2", ... as the temperature data D_{T} with respect to the gas turbine combustor 10 that is identified by "GC001" and the temperature sensor 111 that is identified by "TS101".

### 2-3-4-2. Detection result storage unit 242

The detection result storage unit 242 stores therein the detection result R_{D}. For example, the detection result storage unit 242 stores therein the detection result R_{D} that is output by a detection unit 252 of the control unit 25 (to be described later). An example of data that is stored in the detection result storage unit 242 will be described below with reference to FIG. 4. FIG. 4 is a diagram illustrating an example of the detection result storage unit 242 of the operator terminal 20 according to one embodiment. In the example illustrated in FIG. 4, the detection result storage unit 242 stores therein items such as a "gas turbine combustor", a "detection time", and "flashback detection".

The "gas turbine combustor" indicates identification information for identifying the gas turbine combustor 10 that is a monitoring target. For example, the "gas turbine combustor 10" is the identification number or the identification symbol of the gas turbine and the gas turbine combustor 10. The "detection time" indicates a time at which occurrence or non-occurrence of the flashback FB is determined. For example, the "detection time" is represented by year, month, day, hours, minutes, seconds at which the detection unit 252 determines occurrence or non-occurrence of the flashback FB. The "flashback detection" indicates occurrence or non-occurrence of the flashback FB at the "detection time". For example, the "flashback detection" is represented by "○" when the flashback FB has occurred and represented by "-" when the flashback FB has not occurred.

Specifically, FIG. 4 illustrates a case in which the detection result storage unit 242 stores therein, with respect to the gas turbine combustor 10 that is identified by "GC001",{detection time: "DT101", flashback detection: "-"}, {detection time: "DT102", flashback detection: "O"}, {detection time: "DT103", flashback detection: "O"}, {detection time: "DT104", flashback detection: "-"}, ... as the detection result R_{D}.

### 2-3-4-3. Adjustment result storage unit 243

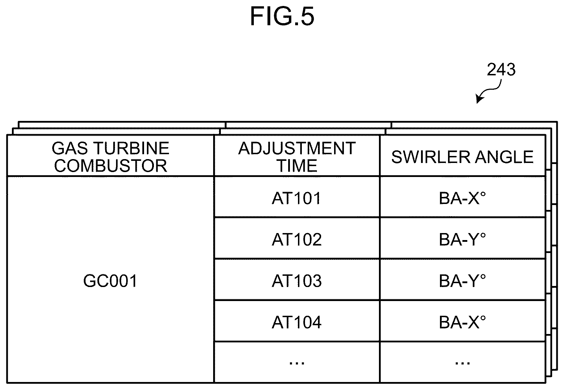

The adjustment result storage unit 243 stores therein an adjustment result R_{A}. For example, the adjustment result storage unit 243 stores therein the adjustment result R_{A} that is output by an adjustment unit 253 of the control unit 25 (to be described later). An example of data that is stored in the adjustment result storage unit 243 will be described below with reference to FIG. 5. FIG. 5 is a diagram illustrating an example of the adjustment result storage unit 243 of the operator terminal 20 according to one embodiment. In the example illustrated in FIG. 5, the adjustment result storage unit 243 stores therein items such as a "gas turbine combustor", an "adjustment time", and a "swirler angle".

The "gas turbine combustor" indicates identification information for identifying the gas turbine combustor 10 that is a monitoring target. For example, the "gas turbine combustor 10" is the identification number or the identification symbol of the gas turbine and the gas turbine combustor 10. The "adjustment time" indicates a time at which the swirler angles of the swirlers 112a are adjusted. For example, the "adjustment time" is represented by year, month, day, hours, minutes, seconds at which the adjustment unit 253 transmits a control signal to the stepping motor 112b to start adjustment of the swirler angles of the swirlers 112a. The "swirler angle" indicates the swirler angles of the swirlers 112a at the "adjustment time". For example, the "swirler angle" is an angle from 0° to 90° of the swirlers 112a indicated by the control signal that the adjustment unit 253 has transmitted to the stepping motor 112b.

Specifically, FIG. 5 illustrates an example in which the adjustment result storage unit 243 stores therein, with respect to the gas turbine combustor 10 that is identified by "GC001", {adjustment time: "AT101", swirler angle: "BA-X°"}, {adjustment time: "AT102", swirler angle: "BA-Y°"}, {adjustment time: "AT103", swirler angle: "BA-Y°"}, {adjustment time: "AT104", swirler angle: "BA-X°"}, ... as the adjustment result R_{A}.

### 2-3-5. Control unit 25

The control unit 25 controls the entire operator terminal 20. The control unit 25 includes the acquisition unit 251, the detection unit 252, and the adjustment unit 253. Here, the control unit 25 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-3-5-1. Acquisition unit 251

The acquisition unit 251 acquires various kinds of information. Meanwhile, the acquisition unit 251 may store various kinds of acquired information in the storage unit 24. In the following, a temperature data acquisition control process, a light receiving data acquisition control process, and a power data acquisition control process will be described.

### Temperature data acquisition control process

The acquisition unit 251 performs the temperature data acquisition control process. For example, the acquisition unit 251 acquires the temperature data D_{T}. At this time, the acquisition unit 251 acquires the temperature data D_{T} that indicates the temperature T of the mixture gas channel 113 in which the mixture gas MG including the fuel FG and the air AG flows and that is output by the temperature sensor 111.

A specific example of the temperature data acquisition control process will be described. Firstly, the acquisition unit 251 acquires "TD101-1", "TD101-2", ... as the temperature data D_{T} that is output by a temperature sensor 111A that is installed in the gas turbine combustor 10 identified by "GC001" and that is identified by "TS101". Secondly, the acquisition unit 251 stores the acquired temperature data D_{T} in the temperature data storage unit 241.

### Light receiving data acquisition control process

The acquisition unit 251 performs the light receiving data acquisition control process. For example, the acquisition unit 251 acquires the light receiving data D_{L}. At this time, the acquisition unit 251 acquires the light receiving data D_{L} that indicates shapes of the swirlers 112a detected by the light receiving sensor 117.

A specific example of the light receiving data acquisition control process will be described. Firstly, the acquisition unit 251 acquires "LD101-1", "LD101-2", ... as the light receiving data D_{L} that is detected by the light receiving sensor 117 that is installed in the burner 110 of the gas turbine combustor 10 identified by "GC001" and that is identified by "LS101". Secondly, the acquisition unit 251 stores the acquired light receiving data D_{L} in the storage unit 24.

### Power data acquisition control process

The acquisition unit 251 performs the power data acquisition control process. For example, the acquisition unit 251 acquires the power data D_{W}. At this time, the acquisition unit 251 acquires the power data D_{W} that indicates the power consumption W of the stepping motor 112b detected by the power sensor 118.

A specific example of the power data acquisition control process will be described. Firstly, the acquisition unit 251 acquires "WD101-1", "WD101-2", ... as the power data D_{W} that is detected by the power sensor 118 that is installed in the burner 110 of the gas turbine combustor 10 identified by "GC001" and that is identified by "WS101". Secondly, the acquisition unit 251 stores the acquired power data D_{W} in the storage unit 24.

### 2-3-5-2. Detection unit 252

The detection unit 252 detects various kinds of information. Meanwhile, the detection unit 252 may store the output detection result in the storage unit 24. Further, the detection unit 252 may refer to various kinds of information that are stored in the storage unit 24. In the following, a flashback occurrence detection control process, a flashback termination detection control process, a flashback occurrence position identification control process, and a swirler abnormality occurrence detection control process will be described.

### Flashback occurrence detection control process

The detection unit 252 performs the flashback occurrence detection control process. For example, the detection unit 252 detects occurrence of the flashback FB that is flashback in the mixture gas channel 113 based on the temperature data D_{T}. At this time, when the temperature data D_{T} exceeds a threshold, the detection unit 252 detects occurrence of the flashback FB.

A specific example of the flashback occurrence detection control process will be described. Firstly, the detection unit 252 refers to "TD101-1" and "TD101-2" as the temperature data D_{T} stored in the temperature data storage unit 241. Secondly, the detection unit 252 detects occurrence of the flashback FB because "TD101-2" exceeds the threshold. Thirdly, the detection unit 252 stores {detection time: "DT101", flashback detection: "-"} and {detection time: "DT102", flashback detection: "O"} as the detection result R_{D} in the detection result storage unit 242.

### Flashback termination detection control process

The detection unit 252 performs the flashback termination detection control process. For example, the detection unit 252 detects termination of the flashback FB in the mixture gas channel 113 based on the temperature data D_{T}. At this time, when the temperature data D_{T} becomes equal to or smaller than the threshold after occurrence of the flashback FB, the detection unit 252 detects termination of the flashback FB.

A specific example of the flashback termination detection control process will be described. For example, the detection unit 252 firstly refers to "TD101-3" and "TD101-4" as the temperature data D_{T} that is stored in the temperature data storage unit 241. Secondly, the detection unit 252 detects termination of the flashback FB because "TD101-3" exceeds the threshold and "TD101-4" is equal to or smaller than the threshold. Thirdly, the detection unit 252 stores {detection time: "DT103", flashback detection: "O"} and {detection time: "DT104", flashback detection: "-"} as the detection result R_{D} in the detection result storage unit 242.

### Flashback occurrence position identification control process

The detection unit 252 performs the flashback occurrence position identification control process. For example, the detection unit 252 identifies a position at which the flashback FB has occurred, by using a temperature change that is indicated by the temperature data D_{T}. At this time, the detection unit 252 identifies the position at which the flashback FB has occurred, by using temperature changes of the pieces of temperature data D_{T} that are output by the plurality of temperature sensors 111.

A specific example of the flashback occurrence position identification control process will be described. Firstly, the detection unit 252 refers to, as the temperature data D_{T} stored in the temperature data storage unit 241, "TD101-1", "TD101-2", ... that are output by the temperature sensor 111A that is installed on the downstream side of the burner 110 and that is identified by "TS101". Secondly, the detection unit 252 detects occurrence of the flashback FB in the vicinity of the temperature sensor 111A because "TD101-2" in the temperature data D_{T} of the temperature sensor 111A exceeds the threshold. Thirdly, the detection unit 252 refers to, as the temperature data D_{T} stored in the temperature data storage unit 241, "TD102-1", "TD102-2", ... that are output by a temperature sensor 111B that is installed on the upstream side of the burner 110 and that is identified by "TS102". Fourthly, the detection unit 252 determines that the flashback FB has not occurred in the vicinity of the temperature sensor 111B because no data in the temperature data D_{T} of the temperature sensor 111B exceeds the threshold. Fifthly, the detection unit 252 stores {occurrence position: "TS101", flashback detection: "O"} and {occurrence position: "TS102", flashback detection: "-"} as the detection result R_{D} in the detection result storage unit 242.

### Swirler abnormality occurrence detection control process

The detection unit 252 performs the swirler abnormality occurrence detection control process. For example, the detection unit 252 detects occurrence of abnormality in the swirlers 112a based on the light receiving data D_{L}. At this time, the detection unit 252 detects abnormality (for example, abrasion, breakage, distortion, or angle abnormality) in the swirlers 112a by comparison with the shapes of the swirlers 112a at the normal time by using the light receiving data D_{L} detected by the light receiving sensor 117. Further, the detection unit 252 detects occurrence of abnormality in the swirlers 112a based on the power data D_{W}. At this time, the detection unit 252 detects occurrence of abnormality in the swirlers 112a by comparison with the power consumption W of the swirlers 112a at the normal time by using the power data D_{W} detected by the power sensor 118.

An example of use of the light receiving data D_{L} will be described as a specific example of the swirler abnormality occurrence detection control process. Firstly, the detection unit 252 refers to "L0101-1", "LD101-2", ... as the light receiving data D_{L} stored in the storage unit 24. Secondly, the detection unit 252 refers to "LD101-0" as light receiving data D_{L0} at the normal time, which is stored in the storage unit 24. Thirdly, the detection unit 252 compares the light receiving data D_{L} and the light receiving data D_{L0}, and when similarity is out of a predetermined range, the detection unit 252 detects occurrence of abnormality in the swirlers 112a. Fourthly, the detection unit 252 stores, as the detection result R_{D}, occurrence of abnormality in the swirlers 112a based on the light receiving data D_{L} in the detection result storage unit 242.

An example of use of the power data D_{W} will be described as a specific example of the swirler abnormality occurrence detection control process. Firstly, the detection unit 252 refers to "WD101-1", "WD101-2", ... as the power data D_{W} stored in the storage unit 24. Secondly, the detection unit 252 refers to "WD101-0" as power data D_{W0} at the normal time, which is stored in the storage unit 24. Thirdly, the detection unit 252 compares the power data D_{W} and the power data D_{W0}, and when a difference is out of a predetermined range, the detection unit 252 detects occurrence of abnormality in the swirlers 112a. Fourthly, the detection unit 252 stores, as the detection result R_{D}, occurrence of abnormality in the swirlers 112a based on the power data D_{W} in the detection result storage unit 242.

### 2-3-5-3. Adjustment unit 253

The adjustment unit 253 performs various kinds of adjustment. Meanwhile, the adjustment unit 253 may store the output adjustment result in the storage unit 24. Further, the adjustment unit 253 may refer to various kinds of information that are stored in the storage unit 24. In the following, a swirler angle adjustment control process, a flow rate change control process, and a supply block control process will be described.

### Swirler angle adjustment control process

The adjustment unit 253 performs the swirler angle adjustment control process. For example, the adjustment unit 253 adjusts the swirler angles of the swirlers 112a via the stepping motor 112b. Further, the adjustment unit 253 adjusts the swirler angle of each of the swirlers 112a via the stepping motor 112b.

The adjustment unit 253, when detecting occurrence of the flashback FB, adjusts the swirler angles of the swirlers 112a. At this time, the adjustment unit 253 adjusts, via the stepping motor 112b, the swirler angles to a horizontal side with respect to the tube axial direction of the mixture gas channel 113.

A process example at the time of occurrence of the flashback will be described as a specific example of the swirler angle adjustment control process. Firstly, the adjustment unit 253 refers to {detection time: "DT102", flashback detection: "O"} as the detection result R_{D} stored in the detection result storage unit 242. Secondly, the adjustment unit 253 determines that the swirler angles of the swirlers 112a are to be changed from "BA-X°" to "BA-Y°" on the horizontal side. Thirdly, the adjustment unit 253 transmits a control signal for changing the swirler angles of the swirlers 112a to "BA-Y°" to the stepping motor 112b. Fourthly, the adjustment unit 253 stores, as the adjustment result R_{A}, {adjustment time: "AT102", swirler angle: "BA-Y°"} in the adjustment result storage unit 243.

The adjustment unit 253, when detecting termination of the flashback FB, adjusts the swirler angles of the swirlers 112a. At this time, the adjustment unit 253 adjusts, via the stepping motor 112b, the swirler angles to the vertical side with respect to the tube axial direction of the mixture gas channel 113.

A process example at the time of termination of the flashback will be described as a specific example of the swirler angle adjustment control process. Firstly, the adjustment unit 253 refers to {detection time: "DT104", flashback detection: "-"} as the detection result R_{D} stored in the detection result storage unit 242. Secondly, the adjustment unit 253 determines that the swirler angles of the swirlers 112a are to be changed from "BA-Y°" to "BA-X°" on the vertical side. Thirdly, the adjustment unit 253 transmits a control signal for changing the swirler angles of the swirlers 112a to "BA-X°" to the stepping motor 112b. Fourthly, the adjustment unit 253 stores, as the adjustment result R_{A}, {adjustment time: "AT104", swirler angle: "BA-X°"} in the adjustment result storage unit 243.

### Flow rate change control process

The adjustment unit 253 performs the flow rate change control process. For example, the adjustment unit 253 changes the flow velocity of the mixture gas MG in the tube axial direction of the mixture gas channel 113 via a mass flow controller. At this time, when the temperature data D_{T} does not become equal to or smaller than the threshold after occurrence of the flashback FB, the adjustment unit 253 increases the flow velocity of the mixture gas MG in the tube axial direction of the mixture gas channel 113 via the mass flow controller that is installed in the gas turbine combustor 10.

### Supply block control process

The adjustment unit 253 performs the supply block control process. For example, the adjustment unit 253 changes a supply amount of the fuel FG or the air AG in the channel of the burner 110. Further, when the temperature data D_{T} does not become equal to or smaller than the threshold after occurrence of the flashback FB, the adjustment unit 253 blocks supply of the fuel FG or the air AG in the channel of the burner 110. At this time, the adjustment unit 253 transmits a control signal to, for example, a driving apparatus (not illustrated) and inserts an internal wall in the fuel channel 115 or the air channel 114 to block supply of the fuel FG or the air AG.

### 3. Specific example of combustor monitoring system 1000

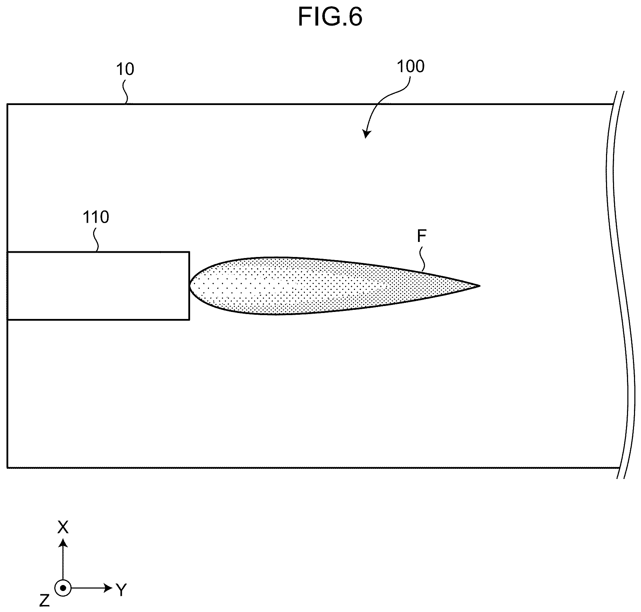

A specific example of the combustor monitoring system 1000 according to one embodiment will be described below with reference to FIG. 6 to FIG. 16 and Expression. In the following, a basic principle of the combustor monitoring system 1000 will be first described, and thereafter, a specific example of the burner 110 of the combustor monitoring system 1000 will be described.

### 3-1. Basic principle of combustor monitoring system 1000

The basic principle of the combustor monitoring system 1000 will be described below with reference to FIG. 6 to FIG. 9 and Expression. In the following, a basic principle of the gas turbine combustor 10 of the combustor monitoring system 1000 will be first described, and thereafter, a basic principle of the burner 110 of the combustor monitoring system 1000 will be described.

### 3-1-1. Basic principle of gas turbine combustor 10

The basic principle of the gas turbine combustor 10 of the combustor monitoring system 1000 will be described below with reference to FIG. 6. FIG. 6 is a diagram for explaining the basic principle of the gas turbine combustor 10 according to one embodiment. As illustrated in FIG. 6, the gas turbine combustor 10 includes the combustion chamber 100 and the burner 110. The combustion chamber 100 is an internal space of the gas turbine combustor 10 and the burner 110 is installed in the combustion chamber 100. Further, the combustion chamber 100 is a combustion zone in which the flame F emitted from the burner 110 exists. Furthermore, the burner 110 is a combustion apparatus that is installed inside the combustion chamber 100, burns the mixture gas MG including the fuel FG and the air AG, and emits the flame F.

### 3-1-2. Basic principle of the burner 110

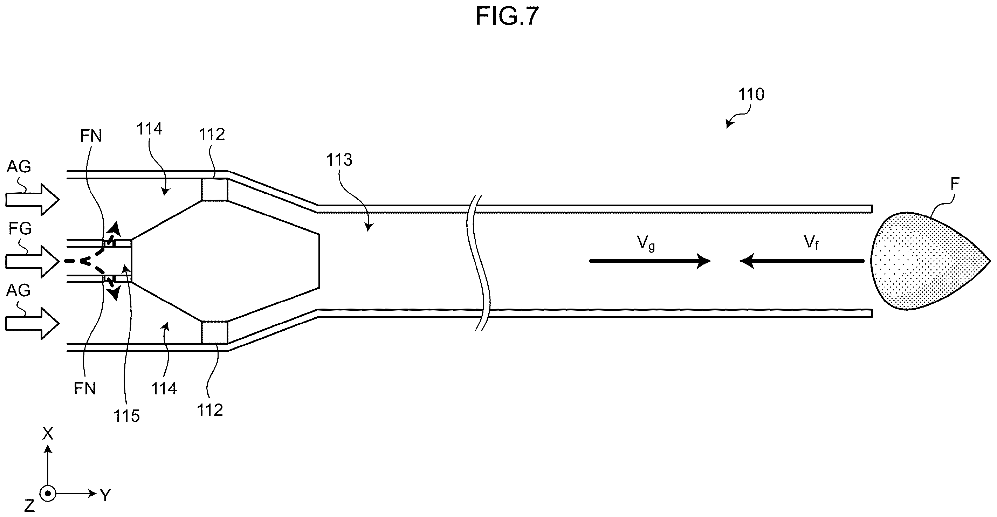

The basic principle of the burner 110 of the combustor monitoring system 1000 will be described below with reference to FIG. 7 to FIG. 9 and Expression. In the following, a basic principle 1 to a basic principle 3 of the burner 110 will be described.

### 3-1-2-1. Basic principle 1

The basic principle 1 of the gas turbine combustor 10 of the combustor monitoring system 1000 will be described with reference to FIG. 7 and Expression. FIG. 7 is a diagram for explaining the basic principle 1 of the burner 110 according to one embodiment.

As illustrated in FIG. 7, in the burner 110, each of gases flows from the upstream side to the downstream side (the positive Y axis direction), and the flame F is emitted by combustion. At this time, the air AG flows through the air channel 114. Further, the fuel FG flows through the fuel channel 115, flows into the air channel 114 via the fuel nozzle FN, and is mixed with the air AG (see dashed arrows). Furthermore, the mixture gas MG of the air AG and the fuel FG flows through the air channel 114, passes through the swirler unit 112 along the swirler angles of the swirlers 112a, and flows through the mixture gas channel 113. Moreover, the flow velocity of the mixture gas MG in the tube axial direction, which flows through the mixture gas channel 113, is denoted by V_{g}.

Here, flame velocity V_{f} is represented by Expression (1) below, where the flame velocity of the flame F is denoted by V_{f}, a combustion rate is denoted by Sᵤ, a rotational speed is denoted by V_{θmax}, burned gas density is denoted by ρ_{b}, and unburned gas density is denoted by ρᵤ.
${V}_{f} = {S}_{u} + {V}_{θ max} \sqrt{1 + \frac{{ρ}_{b}}{{ρ}_{u}}}$

As indicated by Expression (1) above, the flame velocity V_{f} increases with increase in the combustion rate Sᵤ. Further, the flame velocity V_{f} increases with increase in the rotational speed V_{θmax}.

Here, when V_{g}=V_{f}, that is, when the flow velocity V_{g} of the mixture gas MG in the positive Y axis direction and the flame velocity V_{f} of the flame F in the negative Y axis direction are equal to each other, the flame F is emitted stably.

Further, when V_{g}>V_{f}, that is, when the flow velocity V_{g} of the mixture gas MG in the positive Y axis direction is larger than the flame velocity V_{f} of the flame F in the negative Y axis direction, the flame F is blown out. Furthermore, when the above-described condition is met after occurrence of the flashback FB, the flame F is pushed back to an original position.

Moreover, when V_{g}<V_{f}, that is, when the flow velocity V_{g} of the mixture gas MG in the positive Y axis direction is smaller than the flame velocity V_{f} of the flame F in the negative Y axis direction, the flashback FB occurs.

Thus, in the burner 110 that uses the fuel FG, such as gaseous hydrogen, with the high combustion rate Sᵤ, it is possible to prevent occurrence of the flashback FB by decreasing the rotational speed V_{θmax} and decreasing the flame velocity V_{f}. Furthermore, similarly, it is possible to prevent occurrence of the flashback FB by increasing the flow velocity V_{g} of the tube axial direction of the mixture gas MG.

Meanwhile, when the swirlers 112a are simply adjusted so as to decrease the rotational speed and decrease the rotational speed V_{θmax}, unevenness of the air AG and the fuel FG occurs, so that, in some cases, combustion temperature increases and a large amount of NOx is generated in an area where the density of the fuel FG is increased. Furthermore, when the flow velocity V_{g} of the mixture gas MG in the tube axial direction is increased, an output amount may become larger than a demanded amount, so that the flame F may be blown out. In other words, the gas turbine combustor 10 of the combustor monitoring system 1000 is able to solve a problem with decrease in the combustion efficiency of the burner 110 as described above.

### 3-1-2-2. Basic principle 2

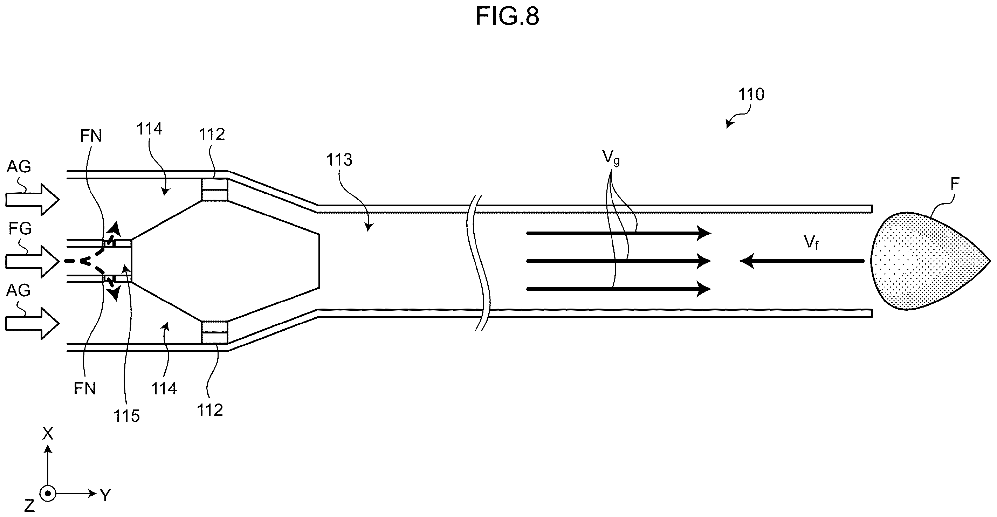

The basic principle 2 of the gas turbine combustor 10 of the combustor monitoring system 1000 will be described below with reference to FIG. 8. FIG. 8 is a diagram for explaining the basic principle 2 of the burner 110 according to one embodiment. Meanwhile, the same explanation as the basic principle 1 of the burner 110 as described above will be omitted.

As illustrated in FIG. 8, in the burner 110, the mixture gas MG of the air AG and the fuel FG flows through the air channel 114, passes through the swirler unit 112 along the swirler angles of the swirlers 112a, and flows through the mixture gas channel 113. In the example illustrated in FIG. 8, the swirler angles of the swirlers 112a are adjusted to about a horizontal direction (0°) in the tube axial direction of the mixture gas channel 113, that is, in the Y axis direction.

Here, as described above, when the swirler angles of the swirlers 112a approach 0°, spiral flow of the mixture gas MG decreases, the rotational speed V_{θmax} decreases, and the flame velocity V_{f} of the flame F decreases, so that occurrence of the flashback FB is prevented. Furthermore, similarly, with increase in the flow velocity V_{g} of the mixture gas MG in the tube axial direction, occurrence of the flashback FB is prevented. In particular, in the case of the flashback FB into the vortex core, occurrence of the flashback FB is prevented by increase in the flow velocity of the channel central portion. In contrast, when the spiral flow of the mixture gas MG decreases as described above, the air AG and the fuel FG are less likely to be mixed, so that combustion efficiency of the burner 110 may be reduced.

### 3-1-2-3. Basic principle 3

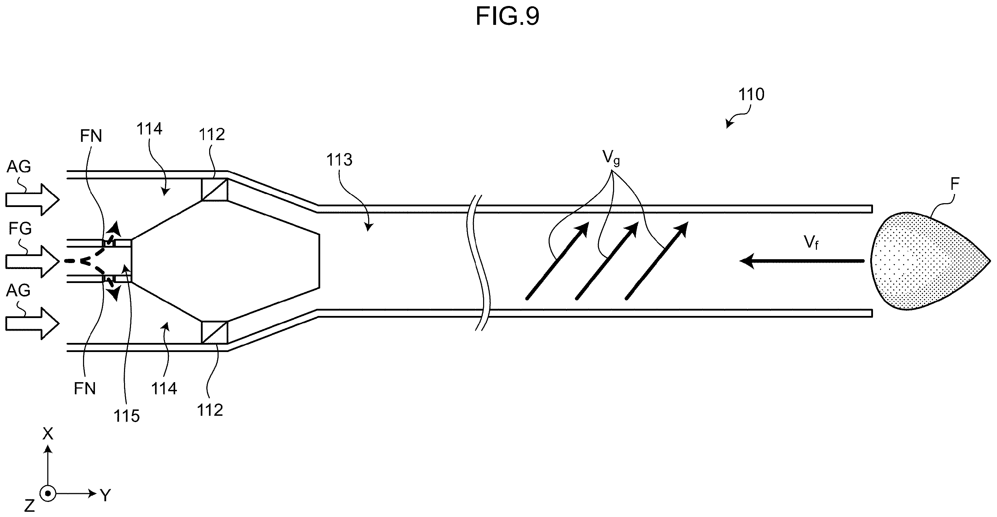

The basic principle 3 of the gas turbine combustor 10 of the combustor monitoring system 1000 will be described below with reference to FIG. 9. FIG. 9 is a diagram for explaining the basic principle 3 of the burner 110 according to one embodiment. Meanwhile, the same explanation as the basic principle 1 of the burner 110 as described above will be omitted.

As illustrated in FIG. 9, in the burner 110, the mixture gas MG of the air AG and the fuel FG flows through the air channel 114, passes through the swirler unit 112 along the swirler angles of the swirlers 112a, and flows through the mixture gas channel 113. In the example illustrated in FIG. 9, the swirler angles of the swirlers 112a are adjusted to about a middle (45°) between the horizontal direction (0°) and the vertical direction (90°) with respect to the tube axial direction of the mixture gas channel 113, that is, the Y axis direction.

Here, as described above, when the swirler angles of the swirlers 112a approach 90°, spiral flow of the mixture gas MG increases, the rotational speed V_{θmax} increases, and the flame velocity V_{f} of the flame F increases, so that occurrence of the flashback FB is accelerated. Furthermore, similarly, with decrease in the flow velocity V_{g} of the mixture gas MG in the tube axial direction, occurrence of the flashback FB is accelerated. In particular, in the case of the flashback FB into the vortex core, occurrence of the flashback FB is prevented by increase in the flow velocity of the channel central portion. In contrast, when the spiral flow of the mixture gas MG increases as described above, the air AG and the fuel FG are easily mixed, so that combustion efficiency of the burner 110 is improved.

### 3-2. Specific example of burner 110

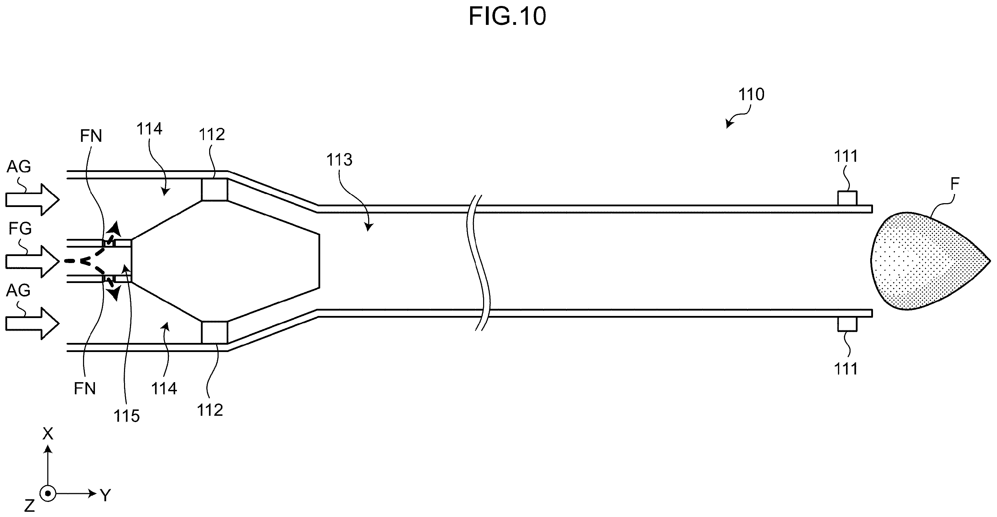

A specific example of the burner 110 of the combustor monitoring system 1000 will be described below with reference to FIG. 10 to FIG. 16. In the following, a specific example 1 in which the single temperature sensor 111 is installed, the specific example 2 in which the plurality of temperature sensors 111 are installed, and a specific example 3 in which various kinds of sensors other than the temperature sensor 111 are installed will be described.

### 3-2-1. Specific example 1

The specific example 1 of the burner 110 of the combustor monitoring system 1000 will be described with reference to FIG. 10 to FIG. 12. In the following, as the specific example 1 in which the single temperature sensor 111 is installed, a specific example 1-1 in which the temperature sensor is installed in the outer tube portion, a specific example 1-2 in which the temperature sensor is installed in the inner tube portion, and a specific example 1-3 indicating the temperature data D_{T} will be described.

### 3-2-1-1. Specific example 1-1

The specific example 1-1 of the burner 110 of the combustor monitoring system 1000 will be described with reference to FIG. 10. FIG. 10 is a diagram illustrating the specific example 1-1 of the burner 110 according to one embodiment.

As illustrated in FIG. 10, in the specific example 1-1 of the burner 110, the temperature sensor 111 is installed in the outer tube portion of the mixture gas channel 113. Meanwhile, in the specific example 1-1 of the burner 110, the temperature sensor 111 is installed in contact with the tube so as to extend around a circumference of the tube in a tube circumferential direction of the outer tube portion of the mixture gas channel 113; however, it is allowable that the temperature sensor 111 does not come into contact with a part of the tube or is not installed in a part of the tube. Further, in the specific example 1-1 of the burner 110, the temperature sensor 111 is installed on the downstream side close to the flame F in the outer tube portion of the mixture gas channel 113; however, it is allowable that the temperature sensor 111 is installed on the upstream side in the outer tube portion of the mixture gas channel 113. Furthermore, the temperature sensor 111 may be, for example, an optical fiber sensor, and may be installed in a spiral manner in the tube axial direction by a single optical fiber.

In the combustor monitoring system 1000, as in the specific example 1-1 of the burner 110 as described above, it is possible to simplify installation of the temperature sensor 111 and simplify maintenance of the temperature sensor 111 by installing the single temperature sensor 111 in the outer tube portion of the mixture gas channel 113. Further, it is possible to easily acquire the pieces of temperature data D_{T} at a plurality of positions.

### 3-2-1-2. Specific example 1-2

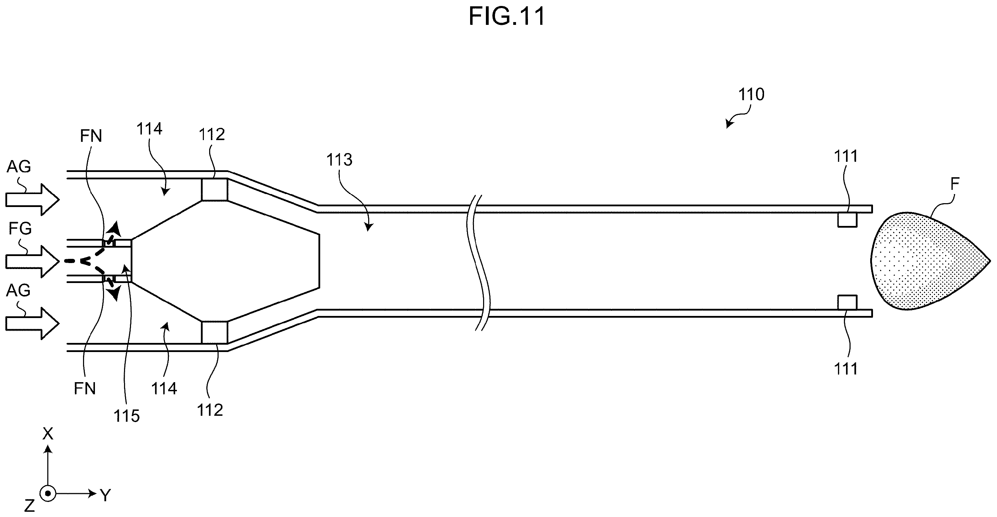

The specific example 1-2 of the burner 110 of the combustor monitoring system 1000 will be described with reference to FIG. 11. FIG. 11 is a diagram illustrating the specific example 1-2 of the burner 110 according to one embodiment.

As illustrated in FIG. 11, in the specific example 1-2 of the burner 110, the temperature sensor 111 is installed in the inner tube portion of the mixture gas channel 113. Meanwhile, in the specific example 1-2 of the burner 110, the temperature sensor 111 is installed in contact with the tube so as to extend around a circumference of the tube in a tube circumferential direction of the inner tube portion of the mixture gas channel 113; however, it is allowable that the temperature sensor 111 does not come into contact with a part of the tube or is not installed in a part of the tube. Further, in the specific example 1-2 of the burner 110, the temperature sensor 111 is installed on the downstream side close to the flame F in the inner tube portion of the mixture gas channel 113; however, it is allowable that the temperature sensor 111 is installed on the upstream side in the inner tube portion of the mixture gas channel 113. Furthermore, the temperature sensor 111 may be, for example, an optical fiber sensor, and may be installed in a spiral manner in the tube axial direction by a single optical fiber.

In the combustor monitoring system 1000, as in the specific example 1-2 of the burner 110 as described above, it is possible to acquire the temperature data D_{T} under a more sensitive condition by installing the single temperature sensor 111 in the inner tube portion of the mixture gas channel 113. Further, it is possible to easily acquire the pieces of temperature data D_{T} at a plurality of positions.

### 3-2-1-3. Specific example 1-3

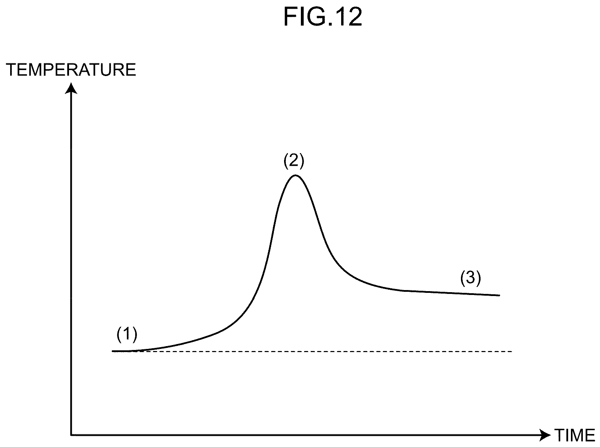

The specific example 1-3 of the burner 110 of the combustor monitoring system 1000 will be described with reference to FIG. 12. FIG. 12 is a diagram illustrating the specific example 1-3 of the burner 110 according to one embodiment.

As illustrated in FIG. 12, the temperature sensor 111 outputs the temperature data D_{T} that indicates the temperature T in the outer tube portion and the inner tube portion of the mixture gas channel 113. Here, a dashed line in FIG. 12 indicates a temporal change of the temperature T in a case where the flashback FB does not occur in the vicinity of the temperature sensor 111, and indicates a constant value because the flashback FB does not reach the vicinity of the temperature sensor 111. FIG. 12(1) indicates a temporal change of the temperature T immediately after the flashback FB occurs in the vicinity of the temperature sensor 111, where the temperature T increases because the flashback FB approaches the vicinity of the temperature sensor 111. FIG. 12(2) indicates a temporal change of the temperature T while the flashback FB is occurring in the vicinity of the temperature sensor 111, where the temperature T reaches a maximum value and gradually decreases because the flashback FB passes by the temperature sensor 111. FIG. 12(3) indicates a temporal change of the temperature T immediately after the flashback FB is terminated in the vicinity of the temperature sensor 111, where the temperature T gradually decreases and reaches the higher temperature T than the temperature at the time of occurrence of the flashback B because the flashback FB passes by the vicinity of the temperature sensor 111.

In the combustor monitoring system 1000, as in the specific example 1-3 of the burner 110 as described above, it is possible to detect occurrence of the flashback FB by checking a temperature change due to occurrence of the flashback FB.

### 3-2-2. Specific example 2

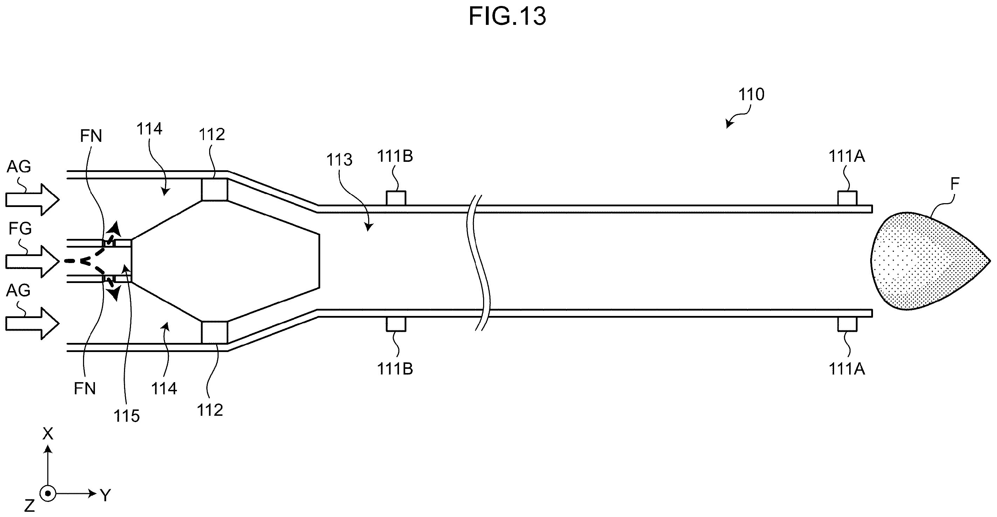

The specific example 2 of the burner 110 of the combustor monitoring system 1000 will be described with reference to FIG. 13 to FIG. 15. In the following, as the specific example 2 in which the plurality of temperature sensors 111 are installed, a specific example 2-1 in which the temperature sensors 111 are installed in the outer tube portion, a specific example 2-2 in which the temperature sensors 111 are installed in the inner tube portion, and a specific example 2-3 indicating the temperature data D_{T} will be described.

### 3-2-2-1. Specific example 2-1

The specific example 2-1 of the burner 110 of the combustor monitoring system 1000 will be described with reference to FIG. 13. FIG. 13 is a diagram illustrating the specific example 2-1 of the burner 110 according to one embodiment.

As illustrated in FIG. 13, in the specific example 2-1 of the burner 110, the temperature sensor 111A is installed on the downstream side in the outer tube portion of the mixture gas channel 113. Further, the temperature sensor 111B is installed on the upstream side in the outer tube portion of the mixture gas channel 113. Meanwhile, in the specific example 2-1 of the burner 110, the temperature sensor 111A and the temperature sensor 111B are installed in contact with the tube so as to extend around a circumference of the tube in a tube circumferential direction of the outer tube portion of the mixture gas channel 113; however, it is allowable that the temperature sensor 111A and the temperature sensor 111B do not come into contact with a part of the tube or are not installed in a part of the tube. Furthermore, the three or more temperature sensors 111 may be installed. Moreover, any of the temperature sensor 111A and the temperature sensor 111B may be installed in the inner tube portion of the mixture gas channel 113. Furthermore, the temperature sensor 111A and the temperature sensor 111B may be, for example, optical fiber sensors, and may be installed so as to output the pieces of temperature data D_{T} at a plurality of positions on the upstream side or the downstream side by single optical fibers.

In the combustor monitoring system 1000, as in the specific example 2-1 of the burner 110 as described above, it is possible to simplify installation of the temperature sensors 111 and simplify maintenance of the temperature sensors 111 by installing the plurality of temperature sensors 111 in the outer tube portion of the mixture gas channel 113. Further, in the combustor monitoring system 1000, it is possible to identify a position at which the flashback FB has occurred by installing the plurality of temperature sensors 111 at different positions in the outer tube portion of the mixture gas channel 113.

### 3-2-2-2. Specific example 2-2

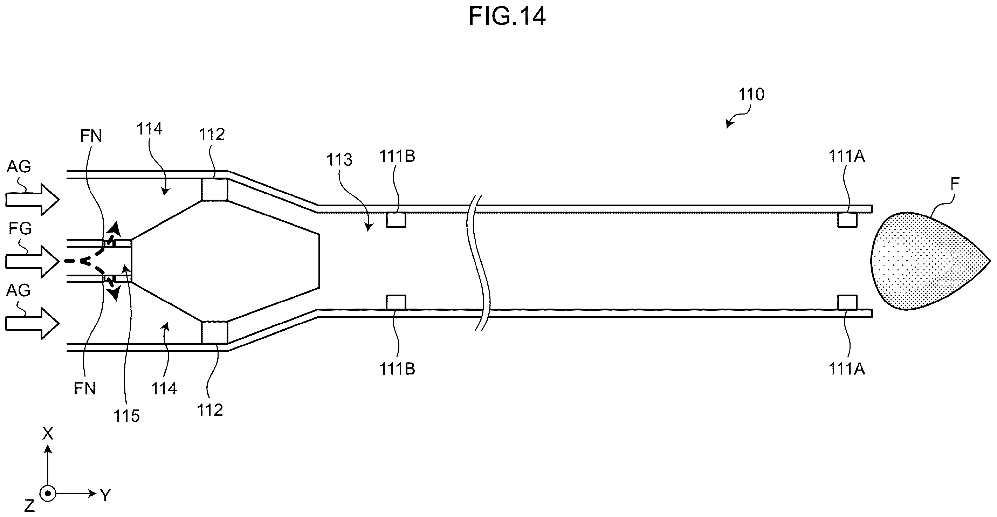

The specific example 2-2 of the burner 110 of the combustor monitoring system 1000 will be described with reference to FIG. 14. FIG. 14 is a diagram illustrating the specific example 2-2 of the burner 110 according to one embodiment.

As illustrated in FIG. 14, in the specific example 2-2 of the burner 110, the temperature sensor 111A is installed on the downstream side in the inner tube portion of the mixture gas channel 113. Further, the temperature sensor 111B is installed on the upstream side in the inner tube portion of the mixture gas channel 113. Meanwhile, in the specific example 2-2 of the burner 110, the temperature sensor 111A and the temperature sensor 111B are installed in contact with the tube so as to extend around a circumference of the tube in a tube circumferential direction of the inner tube portion of the mixture gas channel 113; however, it is allowable that the temperature sensor 111A and the temperature sensor 111B do not come into contact with a part of the tube or are not installed in a part of the tube. Furthermore, the three or more temperature sensors 111 may be installed. Moreover, any of the temperature sensor 111A and the temperature sensor 111B may be installed in the outer tube portion of the mixture gas channel 113. Furthermore, the temperature sensor 111A and the temperature sensor 111B may be, for example, optical fiber sensors, and may be installed so as to output the pieces of temperature data D_{T} at a plurality of positions on the upstream side or the downstream side by a single optical fiber.

In the combustor monitoring system 1000, as in the specific example 2-2 of the burner 110 as described above, it is possible to acquire the temperature data D_{T} under a more sensitive condition by installing the plurality of temperature sensors 111 in the inner tube portion of the mixture gas channel 113. Further, in the combustor monitoring system 1000, it is possible to identify a position at which the flashback FB has occurred by installing the plurality of temperature sensors 111 at different positions in the inner tube portion of the mixture gas channel 113.

### 3-2-2-3. Specific example 2-3

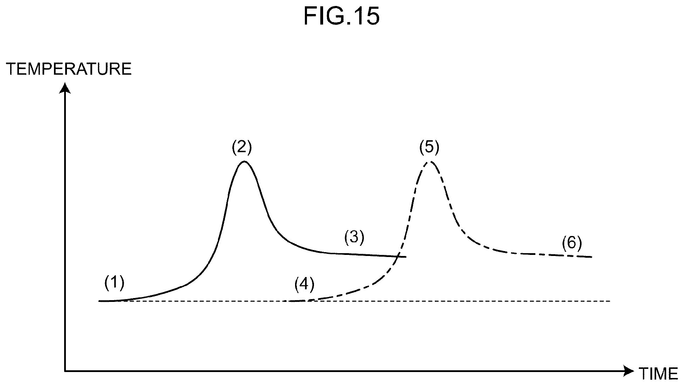

The specific example 2-3 of the burner 110 of the combustor monitoring system 1000 will be described with reference to FIG. 15. FIG. 15 is a diagram illustrating the specific example 2-3 of the burner 110 according to one embodiment.

As illustrated in FIG. 15, the temperature sensor 111A and the temperature sensor 111B output the pieces of temperature data D_{T} that indicate the temperature T in the outer tube portion and the inner tube portion of the mixture gas channel 113. Here, a solid line in FIG. 15 indicates a temperature change of the temperature T that is output by the temperature sensor 111A installed on the downstream side of the mixture gas channel 113 (see FIG. 15(1) to FIG. 15(3)). Further, a dash-dotted line in FIG. 15 indicates a temperature change of the temperature T that is output by the temperature sensor 111B installed on the upstream side of the mixture gas channel 113 (see FIG. 15(4) to FIG. 15(6)). Furthermore, a dashed line in FIG. 15 indicates a temporal change of the temperature T in a case where the flashback FB has not occurred.

In the combustor monitoring system 1000, as in the specific example 2-3 of the burner 110 as described above, by checking a temperature change due to occurrence of the flashback FB by using the plurality of temperature sensors 111 at a plurality of positions, it is possible to detect occurrence of the flashback FB and identify a position of occurrence of the flashback FB.

### 3-2-3. Specific example 3

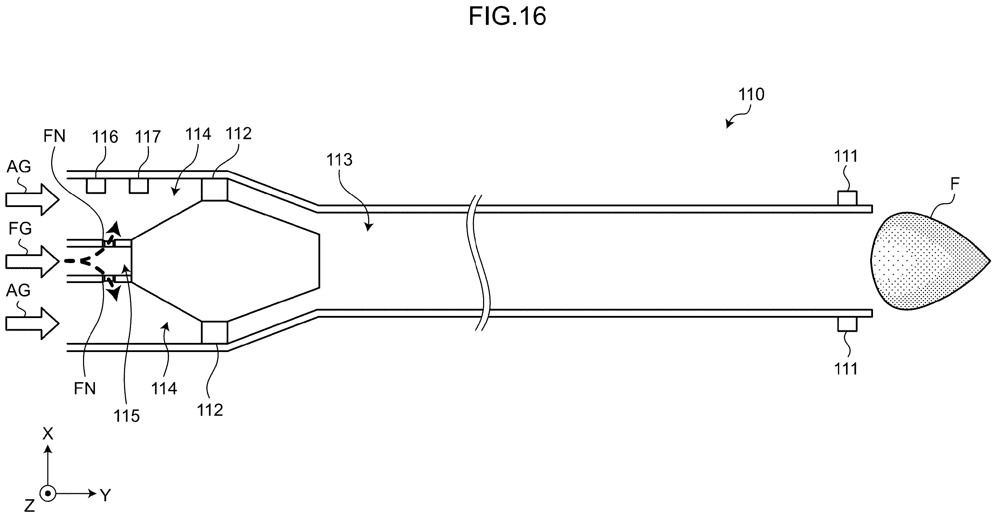

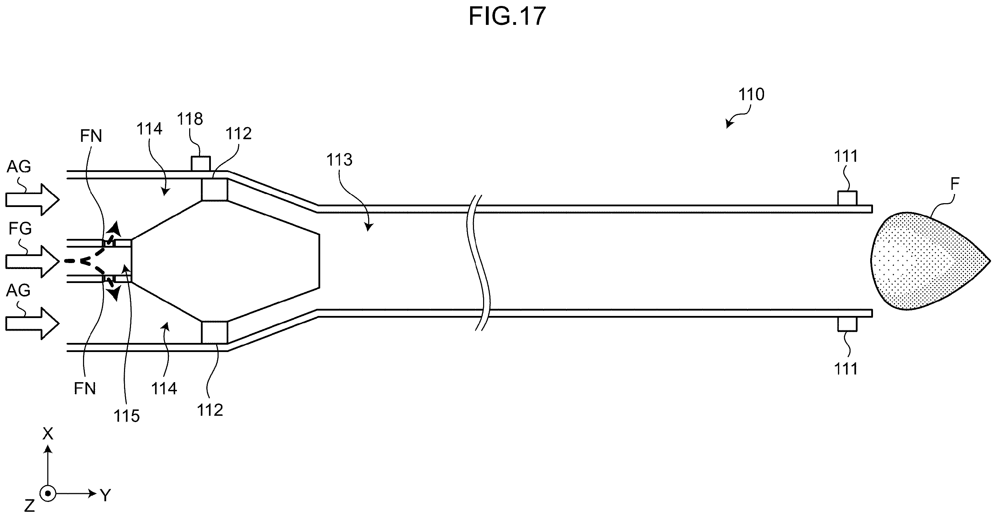

The specific example 3 of the burner 110 of the combustor monitoring system 1000 will be described with reference to FIG. 16 and FIG. 17. In the following, as the specific example 3 in which various kinds of sensors other than the temperature sensor 111 are installed, a specific example 3-1 in which the light source 116 and the light receiving sensor 117 are installed, a specific example 3-2 in which the power sensor 118 is installed, and a specific example 3-3 in which various kinds of other sensors are installed will be described.

### 3-2-3-1. Specific example 3-1

The specific example 3-1 of the burner 110 of the combustor monitoring system 1000 will be described with reference to FIG. 16. FIG. 16 is a diagram illustrating the specific example 3-1 of the burner 110 according to one embodiment.

As illustrated in FIG. 16, in the specific example 3-1 of the burner 110, the light source 116 and the light receiving sensor 117 are installed in an inner tube portion of the air channel 114. At this time, the light source 116 applies light to the swirler unit 112. Further, the light receiving sensor 117 detects light reflected from the swirler unit 112.

In the combustor monitoring system 1000, as in the specific example 3-1 of the burner 110 as described above, by further installing the light source 116 and the light receiving sensor 117, it is possible to acquire the light receiving data D_{L} indicating the shapes of the swirlers 112a and detect occurrence of abnormality in the swirlers 112a based on a change of the shapes.

### 3-2-3-2. Specific example 3-2

The specific example 3-2 of the burner 110 of the combustor monitoring system 1000 will be described with reference to FIG. 17. FIG. 17 is a diagram illustrating the specific example 3-2 of the burner 110 according to one embodiment.

As illustrated in FIG. 17, in the specific example 3-2 of the burner 110, it is possible to further install the power sensor 118 that outputs the power data D_{W} indicating the power consumption W of the stepping motor 112b.

In the combustor monitoring system 1000, as in the specific example 3-2 of the burner 110 as described above, by further installing the power sensor 118, it is possible to acquire the power data D_{W} indicating the power consumption W of the stepping motor 112b and detect occurrence of abnormality of the swirlers 112a based on change of the power consumption W.

### 3-2-3-3. Specific example 3-3

The specific example 3-3 of the burner 110 of the combustor monitoring system 1000 will be described. In the specific example 3-3 of the burner 110, as the various kinds of sensors other than the above-described sensors, it is possible to further install a temperature sensor, a pressure sensor, an acoustic sensor, or the like different from the temperature sensor 111.

In the combustor monitoring system 1000, as in the specific example 3-3 of the burner 110 as described above, by further installing various kinds of sensors, it is possible to detect occurrence of the flashback FB, a position of occurrence of the flashback FB, occurrence of abnormality of the gas turbine combustor 10, a position of occurrence of abnormality of the gas turbine combustor 10, or the like.

### 4. Flow of each of processes of combustor monitoring system 1000

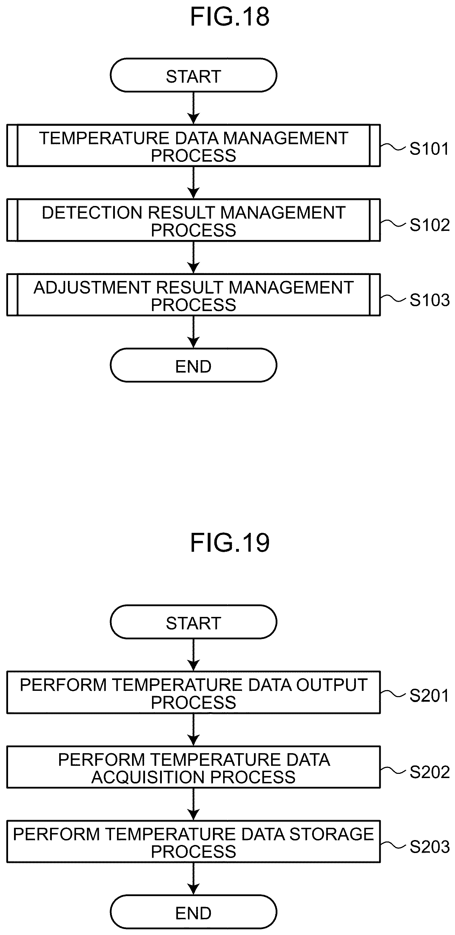

Flows of processes of the combustor monitoring system 1000 according to one embodiment will be described with reference to FIG. 18 to FIG. 21. In the following, the flow of the entire process of the combustor monitoring system 1000 will be described, and thereafter, as each of the processes, a temperature data management process, a detection result management process, and an adjustment result management process will be described.

### 4-1. Entire process of combustor monitoring system 1000

The flow of the entire process of the combustor monitoring system 1000 according to one embodiment will be described with reference to FIG. 18. FIG. 18 is a flowchart illustrating an example of the entire flow of the combustor monitoring system 1000 according to one embodiment. Meanwhile, processes from Step S101 to Step S103 below may be performed in different order. Further, some of the processes from Step S101 to Step S103 below may be omitted.

### 4-1-1. Temperature data management process

Firstly, the combustor monitoring system 1000 performs the temperature data management process (Step S101). For example, the combustor monitoring system 1000 performs processes from Step S201 to Step S203 (to be described later), and manages the temperature data D_{T} output by the temperature sensor 111 that is installed in the mixture gas channel 113 of the burner 110.

### 4-1-2. Detection result management process

Secondly, the combustor monitoring system 1000 performs the detection result management process (Step S102). For example, the combustor monitoring system 1000 performs processes from Step S301 to Step S303 (to be described later), and manages the detection result R_{D} related to occurrence or termination of the flashback FB of the burner 110.

### 4-1-3. Adjustment result management process

Thirdly, the combustor monitoring system 1000 performs the adjustment result management process (Step S103), and terminates the entire process. For example, the combustor monitoring system 1000 performs processes from Step S401 to Step S404 (to be described later), and manages the adjustment result R_{A} related to the swirler angles of the swirlers 112a of the burner 110.

### 4-2. Temperature data management process

The flow of the temperature data management process of the combustor monitoring system 1000 according to one embodiment will be described with reference to FIG. 19. FIG. 19 is a flowchart illustrating an example of the flow of the temperature data management process of the combustor monitoring system 1000 according to one embodiment. Meanwhile, the processes from Step S201 to Step S203 below may be performed in different order. Further, some of the processes from Step S201 to Step S203 may be omitted.

### 4-2-1. Temperature data output process

Firstly, the temperature sensor 111 performs the temperature data output process (Step S201). For example, the temperature sensor 111 is an optical fiber sensor and outputs a frequency change amount that represents the temperature data D_{T} that indicates the temperature T of the mixture gas channel 113.

### 4-2-2. Temperature data acquisition process

Secondly, the operator terminal 20 performs the temperature data acquisition process (Step S202). For example, the operator terminal 20 acquires the temperature data D_{T} of the mixture gas channel 113 from the temperature sensor 111 at intervals of 0.01 second.

### 4-2-3. Temperature data storage process

Thirdly, the operator terminal 20 performs the temperature data storage process (Step S203), and terminates the temperature data management process. For example, the operator terminal 20 stores the temperature data D_{T} of the mixture gas channel 113 acquired from the temperature sensor 111 in the temperature data storage unit 241.

### 4-3. Detection result management process

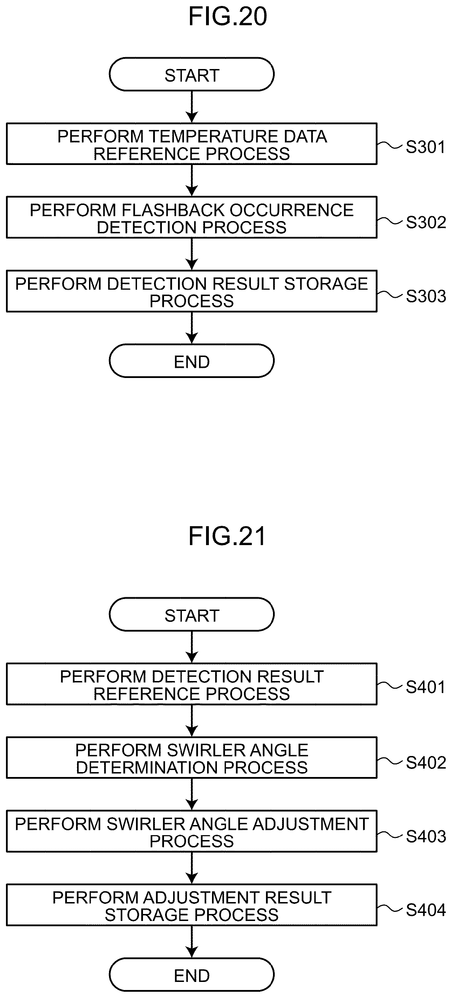

The flow of the detection result management process of the combustor monitoring system 1000 according to one embodiment will be described with reference to FIG. 20. FIG. 20 is a flowchart illustrating an example of the flow of the detection result management process of the combustor monitoring system 1000 according to one embodiment. Meanwhile, processes from Step S301 to Step S303 below may be performed in different order. Further, some of the processes from Step S301 to Step S303 may be omitted.

### 4-3-1. Temperature data reference process

Firstly, the operator terminal 20 performs the temperature data reference process (Step S301). For example, the operator terminal 20 refers to the temperature data D_{T} of the mixture gas channel 113 stored in the temperature data storage unit 241.

### 4-3-2. Flashback occurrence detection process

Secondly, the operator terminal 20 performs the flashback occurrence detection process (Step S302). For example, the operator terminal 20 detects occurrence of the flashback FB when the temperature data D_{T} of the mixture gas channel 113 exceeds the threshold X. Further, the operator terminal 20 detects termination of the flashback FB when the temperature data D_{T} of the mixture gas channel 113 exceeds the threshold X and thereafter becomes equal to or smaller than the threshold X.

### 4-3-3. Detection result storage process

Thirdly, the operator terminal 20 performs the detection result storage process (Step S303), and terminates the detection result management process. For example, the operator terminal 20 stores the detection result R_{D} related to occurrence or termination of the flashback FB in the detection result storage unit 242.

### 4-4. Adjustment result management process

The flow of the adjustment result management process of the combustor monitoring system 1000 according to one embodiment will be described with reference to FIG. 21. FIG. 21 is a flowchart illustrating an example of the flow of the adjustment result management process of the combustor monitoring system 1000 according to one embodiment. Meanwhile, processes from Step S401 to Step S404 below may be performed in different order. Further, some of the processes from Step S401 to Step S404 below may be omitted.

### 4-4-1. Detection result reference process

Firstly, the operator terminal 20 performs the detection result reference process (Step S401). For example, the operator terminal 20 refers to the detection result R_{D} related to occurrence or termination of the flashback FB stored in the detection result storage unit 242.

### 4-4-2. Swirler angle determination process

Secondly, the operator terminal 20 performs the swirler angle determination process (Step S402). For example, when detecting occurrence of the flashback FB, the operator terminal 20 determines the swirler angle such that the swirler angle is adjusted to the horizontal side with respect to the tube axial direction of the mixture gas channel 113. Further, when detecting termination of the flashback FB, the operator terminal 20 determines the swirler angle such that the swirler angle is adjusted to the horizontal side with respect to the tube axial direction of the mixture gas channel 113.

### 4-4-3. Swirler angle adjustment process

Thirdly, the operator terminal 20 performs the swirler angle adjustment process (Step S403). For example, when detecting occurrence of the flashback FB, the operator terminal 20 transmits a control signal to the stepping motor 112b to adjust the swirler angle to the horizontal side with respect to the tube axial direction of the mixture gas channel 113. Further, when detecting termination of the flashback FB, the operator terminal 20 transmits a control signal to the stepping motor 112b to adjust the swirler angle to the vertical side with respect to the tube axial direction of the mixture gas channel 113.

### 4-4-4. Adjustment result storage process

Fourthly, the operator terminal 20 performs the adjustment result storage process (Step S404), and terminates the adjustment result management process. For example, the operator terminal 20 stores the adjustment result R_{A} related to the swirler angles of the swirlers 112a in the adjustment result storage unit 243.

### 5. Effects of embodiments

Effects of one embodiment will be described. In the following, first to fourteenth effects corresponding to the configuration and the processes according to one embodiment will be described.

### 5-1. First effect

Firstly, in the configuration or the process according to one embodiment as described above, the combustor monitoring system 1000 includes the gas turbine combustor 10 and the operator terminal 20 that is connected to the gas turbine combustor 10. The gas turbine combustor 10 includes the burner 110. The burner 110 includes the swirler 112a that is installed in the inner tube portion of the channel in which the mixture gas MG including the fuel FG and the air AG flows, and the temperature sensor 111 that outputs the temperature data D_{T} indicating the temperature T of the channel. The operator terminal 20 acquires the temperature data D_{T}, detects occurrence of the flashback FB in the channel based on the temperature data D_{T}, and adjusts the swirler angle of the swirler 112a when detecting the occurrence of the flashback FB. Therefore, in one embodiment, it is possible to prevent occurrence of the flashback FB in the burner 110 of the gas turbine combustor 10.

### 5-2. Second effect

Secondly, in the configuration or the process according to one embodiment as described above, the swirler 112a includes the stepping motor 112b that is able to drive the swirler 112a. The temperature sensor 111 is installed on the downstream side of the swirler 112a in the tube axial direction of the channel. The operator terminal 20, when the temperature data D_{T} exceeds a threshold, detects the occurrence of the flashback FB, and adjusts, via the stepping motor 112b, the swirler angle to the horizontal side with respect to the tube axial direction of the mixture gas channel 113. Therefore, in one embodiment, it is possible to decrease the rotational speed of the mixture gas MG and increase, the flow velocity of the mixture gas MG in the tube axial direction, in particular, the flow velocity of the channel central portion, so that it is possible to prevent occurrence of the flashback FB in the burner 110 of the gas turbine combustor 10.

### 5-3. Third effect

Thirdly, in the configuration or the process according to one embodiment as described above, the temperature sensor 111 is an optical fiber sensor and installed in the outer tube portion of the mixture gas channel 113. Therefore, in one embodiment, it is possible to easily acquire the temperature data D_{T} of the mixture gas channel 113, so that it is possible to prevent occurrence of the flashback FB in the burner 110 of the gas turbine combustor 10.

### 5-4. Fourth effect

Fourthly, in the configuration or the process according to one embodiment as described above, the temperature sensor 111 is an optical fiber sensor and installed in the inner tube portion of the mixture gas channel 113. Therefore, in one embodiment, it is possible to acquire the temperature data D_{T} of the mixture gas channel 113 with high sensitivity, so that it is possible to prevent occurrence of the flashback FB in the burner 110 of the gas turbine combustor 10.

### 5-5. Fifth effect

Fifthly, in the configuration or the process according to one embodiment as described above, the temperature sensor 111 is an optical fiber sensor and installed in the tube circumferential direction of the mixture gas channel 113. Therefore, in one embodiment, it is possible to widely acquire the temperature data D_{T} of the mixture gas channel 113, so that it is possible to prevent occurrence of the flashback FB in the burner 110 of the gas turbine combustor 10.

### 5-6. Sixth effect

Sixthly, in the configuration or the process according to one embodiment as described above, a plurality of the temperature sensors 111 are optical fiber sensors and installed at a plurality of different position in a tube of the mixture gas channel 113. Therefore, in one embodiment, it is possible to acquire the temperature data D_{T} of the mixture gas channel 113 with high accuracy, so that it is possible to prevent occurrence of the flashback FB in the burner 110 of the gas turbine combustor 10.

### 5-7. Seventh effect

Seventhly, in the configuration or the process according to one embodiment as described above, when the temperature data D_{T} becomes equal to or smaller than the threshold after the occurrence of the flashback FB, the operator terminal 20 detects termination of the flashback FB, and adjusts, via the stepping motor 112b, the swirler angle to the vertical side with respect to the tube axial direction of the mixture gas channel 113. Therefore, in one embodiment, it is possible to increase the rotational speed of the mixture gas MG and decrease the flow velocity of the mixture gas MG in the tube axial direction, in particular, the flow velocity at the channel central portion, so that it is possible to prevent the occurrence of the flashback FB in the burner 110 of the gas turbine combustor 10 and improve combustion efficiency of the burner 110 of the gas turbine combustor 10.

### 5-8. Eighth effect

Eighthly, in the configuration or the process according to one embodiment as described above, the operator terminal 20 adjusts the swirler angle of each of the swirlers 112a via the stepping motor 112b. Therefore, in one embodiment, it is possible to control the mixture gas MG with improved accuracy, so that it is possible to prevent occurrence of the flashback FB in the burner 110 of the gas turbine combustor 10.

### 5-9. Ninth effect

Ninthly, in the configuration or the process according to one embodiment as described above, the operator terminal 20 identifies a position at which the flashback FB has occurred by using a temperature change indicated by the temperature data D_{T}. Therefore, in one embodiment, it is possible to control the mixture gas MG in accordance with the position of the occurrence of the flashback FB, so that it is possible to prevent occurrence of the flashback FB in the burner 110 of the gas turbine combustor 10.

### 5-10. Tenth effect

Tenthly, in the configuration or the process according to one embodiment as described above, the burner 110 further includes the light source 116 and the light receiving sensor 117 that detects light emitted from the light source 116. The operator terminal 20 acquires the light receiving data D_{L} that is detected by the light receiving sensor 117 and that indicates a shape of the swirler 112a, and detects occurrence of abnormality in the swirler 112a based on the light receiving data D_{L}. Therefore, in one embodiment, it is possible to prevent the occurrence of the flashback FB in the burner 110 of the gas turbine combustor 10 and detect abnormality in the swirler 112a based on the shape.

### 5-11. Eleventh effect

Eleventhly, in the configuration or the process according to one embodiment as described above, the operator terminal 20 acquires the power data D_{W} indicating the power consumption W of the stepping motor 112b, detects occurrence of abnormality in the swirler 112a based on the power data D_{W}. Therefore, in one embodiment, it is possible to control the occurrence of the flashback FB in the burner 110 of the gas turbine combustor 10 detect abnormality of the swirler 112a based on the power consumption W.

### 5-12. Twelfth effect

Twelfthly, in the configuration or the process according to one embodiment as described above, when the temperature data D_{T} does not become equal to or smaller than the threshold after the occurrence of the flashback FB, the operator terminal 20 increases flow velocity of the mixture gas MG in the tube axial direction of the mixture gas channel 113 via a mass flow controller that is installed in the gas turbine combustor 10. Therefore, in one embodiment, it is possible to increase the flow velocity of the mixture gas MG in the tube axial direction by further using the mass flow controller, so that it is possible to prevent occurrence of the flashback FB in the burner 110 of the gas turbine combustor 10.

### 5-13. Thirteenth effect

Thirteenthly, in the configuration or the process according to one embodiment as described above, when the temperature data D_{T} does not become equal to or smaller than the threshold after occurrence of the flashback FB, the operator terminal 20 blocks supply of the fuel FG or the air AG in the mixture gas channel 113 of the burner 110. Therefore, in one embodiment, it is possible to control combustion of the mixture gas MG, so that it is possible to prevent occurrence of the flashback FB in the burner 110 of the gas turbine combustor 10.

### 5-14. Fourteenth effect

Fourteenthly, in the configuration or the process according to one embodiment as described above, the fuel FG includes gaseous hydrogen. Therefore, in one embodiment, even when the fuel FG with a high combustion rate is used, it is possible to prevent occurrence of the flashback FB in the burner 110 of the gas turbine combustor 10.

### 6. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 7. Hardware

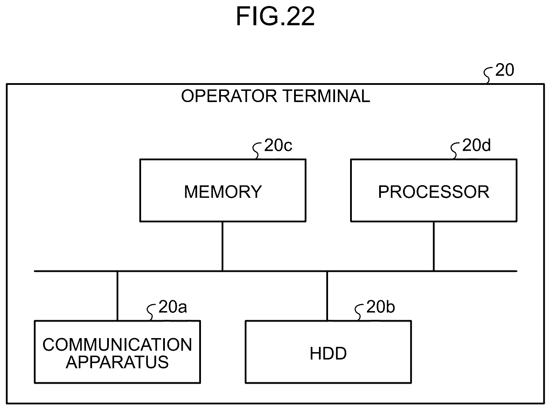

A hardware configuration example of the operator terminal 20 will be described below. Meanwhile, the other apparatuses may have the same hardware configurations. FIG. 22 is a diagram illustrating a hardware configuration example according to one embodiment. As illustrated in FIG. 22, the operator terminal 20 includes a communication apparatus 20a, a Hard Disk Drive (HDD) 20b, a memory 20c, and a processor 20d. Further, all of the units illustrated in FIG. 22 are connected to one another via a bus or the like.

The communication apparatus 20a is a network interface card or the like, and performs communication with a different server or the like. The HDD 20b stores therein a program or a database for implementing the functions as illustrated in FIG. 2.

The processor 20d reads, from the HDD 20b or the like, a program that executes the same processes as those of each of the processing units illustrated in FIG. 2, loads the program onto the memory 20c, and executes the processes that implement each of the functions illustrated in FIG. 2. For example, the processes implement the same functions as those of each of the processing units that are included in the operator terminal 20. Specifically, the processor 20d reads, from the HDD 20b or the like, a program that has the same functions as those of the acquisition unit 251, the detection unit 252, the adjustment unit 253, and the like. Further, the processor 20d executes a process for implementing the same processes as those of the acquisition unit 251, the detection unit 252, the adjustment unit 253, and the like.

In this manner, the operator terminal 20 operates as an apparatus that reads and executes the program to implement various kinds of processing methods. Further, the operator terminal 20 is able to implement the same functions as those of the embodiments as described above by causing a medium reader to read the above-described program from a recording medium and executing the above-described read program. Meanwhile, the program described in one embodiment need not always be executed by the operator terminal 20. For example, the present invention may be applied in the same manner even when a different computer or a different server apparatus executes the above-described program or the different computer and the different server apparatus execute the above-described program in a cooperative manner.

The program according to one embodiment may be distributed via a network, such as the Internet. Further, the program may be recorded in a computer readable recording medium, such as a hard disk, a flexible disk (FD), a compact disc (CD)-ROM, a MagnetoOptical disk (MO), or a Digital Versatile Disk (DVD), and may be executed by being read from the recording medium by a computer.

According to one aspect of the present disclosure, it is possible to prevent occurrence of flashback in a burner of a combustor.

## Claims

1. A monitoring system (1000) comprising:
a combustor (10); and
a monitoring apparatus (20) that is connected to the combustor (10), wherein
the combustor (10) includes
a burner (110) that includes
a swirler (112a) that is installed in an inner tube portion of a channel in which a mixture gas including a fuel and air flows; and
a temperature sensor (111) that outputs temperature data indicating temperature of the channel, and
the monitoring apparatus (20) includes
a processor (20d) that
acquires the temperature data,
detects occurrence of flashback in the channel based on the temperature data, and
adjusts an angle of the swirler when detecting the backflow of the flame.

2. The monitoring system (1000) according to claim 1, wherein
the swirler (112a) includes a motor (112b) that is able to drive the swirler (112a),
the temperature sensor (111) is installed on a downstream side of the swirler (112a) in a tube axial direction of the channel, and
the processor (20d), when the temperature data exceeds a threshold, detects the occurrence of the backflow of the flame, and adjusts, via a motor, the angle to a horizontal direction with respect to a tube axis of the channel.

3. The monitoring system (1000) according to claim 1 or 2, wherein the temperature sensor (111) is an optical fiber sensor and installed in an outer tube portion of the channel.

4. The monitoring system (1000) according to claim 1 or 2, wherein the temperature sensor (111) is an optical fiber sensor and installed in an inner tube portion of the channel.

5. The monitoring system (1000) according to any one of claims 1 to 4, wherein the temperature sensor (111) is an optical fiber sensor and installed in a tube circumferential direction of the channel.

6. The monitoring system (1000) according to any one of claims 1 to 5, wherein a plurality of the temperature sensors (111) are optical fiber sensors that are installed at a plurality of different positions in a tube of the channel.

7. The monitoring system (1000) according to claim 2, wherein the processor (20d) detects termination of the backflow of the flame when the temperature data becomes equal to or smaller than the threshold after the occurrence of the backflow of the flame, and adjusts, via the motor (112b), the angle to a vertical direction with respect to a tube axis of the channel.

8. The monitoring system (1000) according to claim 2, wherein the processor (20d) adjusts the angle of each of the swirlers via the motor (112b).

9. The monitoring system (1000) according to any one of claims 6 to 8, wherein the processor (20d) identifies a position at which the backflow of the flame has occurred, by using a temperature change indicated by the temperature data.

10. The monitoring system (1000) according to any one of claims 1 to 9, wherein
the burner (110) further includes
a light source (116); and
a light receiving sensor (117) that detect light emitted from the light source (116), and
the processor (20d) acquires light receiving data that is detected by the light receiving sensor (117) and that indicates a shape of the swirler (112a), and detects occurrence of abnormality of the swirler (112a) based on the light receiving data.

11. The monitoring system (1000) according to claim 2, wherein the processor (20d) acquires power data indicating power consumption of the motor (112b), and detects occurrence of abnormality in the swirler (112a) based on the power data.

12. The monitoring system (1000) according to any one of claims 1 to 11, wherein when the temperature data does not become equal to or smaller than the threshold after the occurrence of the backflow of the flame, the processor (20d) increases flow velocity of the mixture gas in a tube axial direction of the channel via a mass flow controller that is installed in the combustor (10).

13. The monitoring system (1000) according to any one of claims 1 to 12, wherein when the temperature data does not become equal to or smaller than the threshold after occurrence of the backflow of the flame, the processor blocks supply of one of the fuel and the air in the channel of the burner (110).

14. The monitoring system (1000) according to any one of claims 1 to 13, wherein the fuel includes gaseous hydrogen.

15. A monitoring method implemented by a monitoring system (1000) including a combustor (10) and a monitoring apparatus (20) connected to the combustor (10), wherein
the combustor (10) includes
a burner (110) that includes
a swirler (112a) that is installed in an inner tube portion of a channel in which a mixture gas including a fuel and air flows; and
a temperature sensor (111) that outputs temperature data indicating temperature of the channel, and
the monitoring apparatus (20)
acquires the temperature data,
detects occurrence of flashback in the channel based on the temperature data, and
adjusts an angle of the swirler (112a) when detecting the backflow of the flame.
